# EUROPEAN PATENT SPECIFICATION

(11) **EP 4 609 460 B1**
(45) Date of publication and mention of the grant of the patent: **06.05.2026**
(21) Application number: 23789264.1
(22) Date of filing: 09.10.2023
(51) Int. Cl.: H01M 10/658, H01M 50/227, H01M 50/231, C08L 83/04, C08L 83/06, C08K 3/016, C08K 5/00

(54) **SILICONE-BASED THERMAL INSULATION MATERIALS FOR BATTERY MODULES**
SILIKONBASIERTE WÄRMEDÄMMMATERIALIEN FÜR BATTERIEMODULE
MATÉRIAUX D'ISOLATION THERMIQUE À BASE DE SILICONE POUR MODULES DE BATTERIE

(30) Priority: 26.10.2022 US 202263419615 P
(43) Date of publication of application: 03.09.2025
(73) Proprietor: Wacker Chemie AG, 81671 München (DE)
(72) Inventor: SHAO, Yan, Ann Arbor, Michigan 48108 (US); EDMAIER, Sandra, 81671 Munich (DE); FAYBRICK, Daryl, Ann Arbor, Michigan 48108 (US); KALCHAUER, Michael, 81671 Munich (DE); POLCHINSKI, Laura, Ann Arbor, Michigan 48108 (US)
(74) Representative: Mieskes, Klaus Theoderich
(86) International application number: PCT/EP2023/077845
(87) International publication number: WO 2024/088735

(56) References cited:
- WO-A1-2022/207119

## Description

### FIELD OF THE INVENTION

The invention is directed to an improvement in battery modules which are suitable for applications requiring large amounts of electrical energy, such as batteries for electrical vehicles.

### DESCRIPTION OF THE RELATED ART

In the past, when it was desired to store electrical energy in a rechargeable manner, lead-acid batteries were widely used. These batteries, however, have well-known disadvantages. Among these disadvantages are a very high mass and therefore a relatively low energy density, the use of lead which is environmentally disfavored, and the presence of very strong sulfuric acid with its obvious disadvantages. Nickel cadmium batteries offered an improvement in storage density, but were and are relatively expensive. Their use had been primarily limited to power tools and consumer electrical products. Moreover, the energy storage density of nickel cadmium batteries is still not as high as desired. Recently, lithium ion batteries have become ubiquitous due to their higher energy storage capacity, and have been used more recently to power electrical vehicles, which was impossible with lead acid batteries due to their high weight.

The lithium ion batteries employed in large-scale applications such as electrical vehicles are not produced as single batteries, but rather are produced as individual canisters or "cells" which are then assembled into modules. The cells may be cylindrical, rectangular, or in any particular shape. An electric vehicle "battery" may consist of one or more of such modules connected together electrically. While these modules might be a single, large module consisting of a plurality of individual cells, it is more common at present to assemble a plurality of these modules to form a "battery pack". These battery packs minimally comprise a frame containing the modules, a top cover, and a bottom cover. Depending upon the vehicle design and other characteristics, such as whether this vehicle is a solely electrical vehicle, a hybrid electric/gasoline vehicle, an electrically powered aircraft, or an industrial vehicle such as a "hi lo", the battery pack may also contain additional elements, such as stiffening ribs and the like. A "module" may also consist of a space with a frame or compartment holding a plurality of individual cells, rather than a self-supporting structure to be assembled into a battery pack.

Lithium ion batteries are but one type of modern rechargeable, high energy density ion batteries which may be used in applications such as those described above. Virtually all of these types of batteries contain active elements, e.g. lithium, sodium, or aluminum, which render these batteries potentially flammable. Lithium ion batteries, for example, have been known to occasionally catch fire, and for this reason, are banned from checked luggage when flying. The potential for an incendiary event becomes more likely when such batteries are used in electric vehicles, as these vehicles may be involved in accidents which destroy the integrity of the battery pack or of individual battery modules. These types of incendiary events are even the more dangerous, as water which is commonly used to fight fires may actually increase the energy released. It is clear that it would be desirable to limit the amount of energy released during an incendiary event, in order that not only the occupants of the vehicle may be protected, but other flammable components of the electric vehicle may also be protected and prevented from burning. The top and bottom covers of the battery pack provide some degree of protection. However, these covers cannot be made inordinately thick without a significant weight penalty, and even if a thicker cover were possible, since the covers are constructed of metal, they would offer little impediment to thermal conduction. While there are many potential insulating materials, such as those based on pyrogenic silica, these fillers are difficult to employ in an industrial setting, and would be prone to liberate large quantities of silica particles in the case of an accident. Many other insulation materials are either expensive to produce or to apply, or cannot withstand the high temperatures which are conceivably encountered. Thus, it would be desirable to provide an economical means to thermally insulate the vehicle and its environs in the case of an incendiary event of the battery pack.

US Patent 9,507,054 discloses silicon compositions having high optical reflectance and also flame retardant properties, which include a silicone resin, an organosilicon compound, aluminum hydroxide as a flame retardant, generally present in an amount of up to 45 weight percent, and a reflective filler comprising titanium dioxide. These compositions have very high viscosity, and are suitable for forming articles by processes such as injection molding, transfer molding, casting, extruding, over molding, compression molding, or cavity molding. The high viscosity prevents the economical use of such compounds as thermal insulators in lithium ion batteries, and the relatively low amount of aluminum hydroxide (also known as aluminum trihydrate, or "ATH") does not provide for sufficient thermal stability.

International published application WO2022207119A1 discloses compositions which are ceramifiyable and contain ATH in amounts of up to 65 weight percent. However, like the compositions disclosed in the 9,507,054 Patent, these compositions are of high viscosity, and their application is limited to injection molding, casting, and press molding. Furthermore, in demanding applications, the thermal stability may not be high enough, and addition of greater quantities of fillers such as ATH only increase the viscosity to higher levels, further complicating its use.

Thixotropic condensation curable compositions are known from US Patent 3,711,570 A. The compositions disclosed in the foregoing patent are typical condensation-curable (moisture-curable) compositions where thixotropy is created by employing emulsion-grade polyvinyl chloride particles, preferably in an amount from five to 50 weight percent. While such compositions are thixotropic, they are also combustible, and upon burning can generate toxic hydrogen chloride.

### SUMMARY OF THE INVENTION

Applicants have surprisingly and unexpectedly discovered that a sprayable, thixotropic, crosslinkable organosilicon composition which contains greater than 50 weight percent of aluminum trihydrate-containing inorganic filler as a fire retardant and ceramifying filler, a silicone thermal stabilizer, and a ceramifying catalyst. The total aluminum trihydrate content in the crosslinkable organosilicon composition is minimally 30 weight percent. The composition can be economically applied, and can provide a high degree of thermal insulation between the battery cells and/or modules, and the covers associated therewith. The crosslinkable silicone composition may be a condensation-curable composition or an addition-curable composition, and may be used as thermal insulation in battery modules and battery packs for applications requiring high energy storage requirements. The total aluminum trihydrate content in the crosslinkable organosilicon composition is minimally 30 weight percent.

### BRIEF DESCRIPTION OF THE DRAWING FIGURES

Figure 1 illustrates one embodiment of a battery pack in an "exploded" view.
Figure 2 illustrates one embodiment of an assembled battery pack.
Figure 3 illustrates a cross-section of the battery pack of Figures 1 and 2, showing the ceramifyable organosilicon composition.

### DETAILED DESCRIPTION OF THE PREFERRED EMBODIMENTS

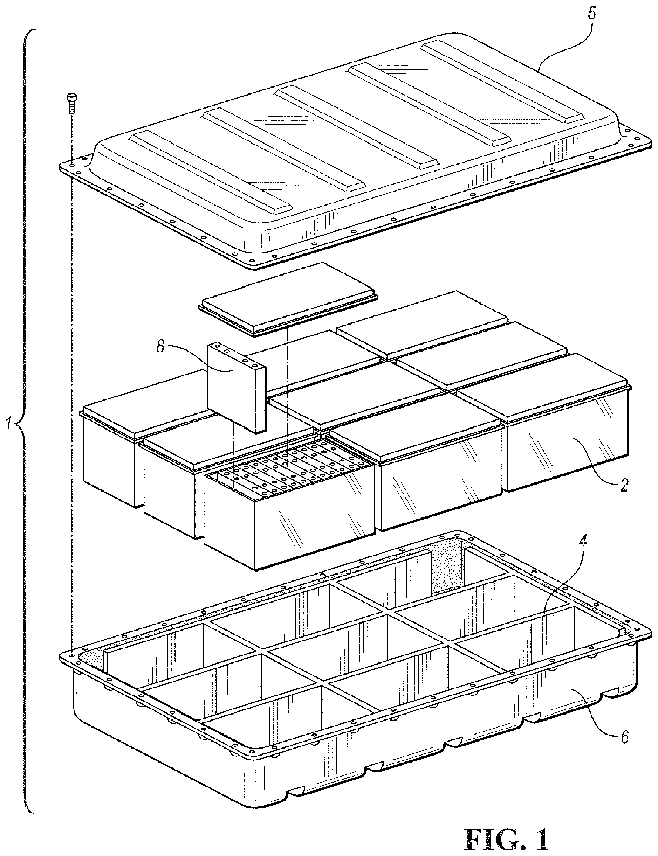

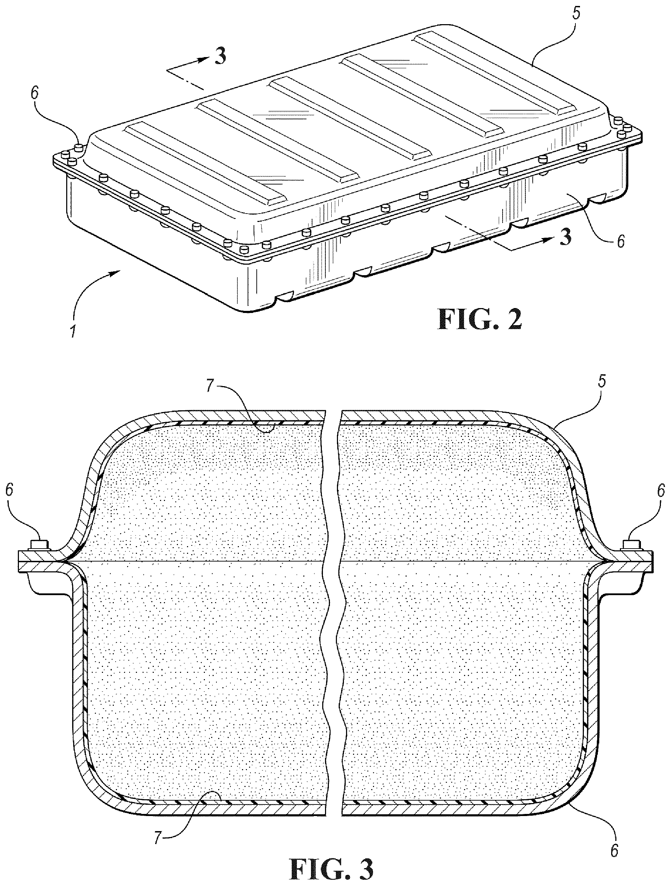

A generalized battery pack is illustrated in exploded view in Figure 1, where the battery pack 1 contains battery modules 2 containing individual battery "cannisters" or "cells" 8. The electrical connections form no part of the invention and are not shown. The modules are contained within an optional frame 4. The battery pack is enclosed on its upper and lower surfaces by upper cover 5 and lower cover 6, secured to each other by fasteners 9. Between the battery modules/cells and the upper cover 5 is disposed a ceramifyable organosilicon composition 7 of the present invention, as shown in cross-section in Figure 2, in this case shown as having been applied to the lower surface of the upper cover as well as the upper surface of the lower cover.

The crosslinkable silicone compositions of the present invention may be condensation-curable compositions or addition-curable compositions. A condensation-curable composition is one which cures in the presence of moisture, generally moisture naturally present in the environment, although added water or moisture may also be employed to cure or accelerate the cure of these compositions. An addition-curable composition in the sense of the present application, is a silicone composition which cures by the addition of silicon-bonded hydrogen onto an ethylenically unsaturated moiety. These compositions require the presence of a hydrosilylation catalyst, and are also well known to those skilled in the art.

Condensation-curable and addition-curable silicone compositions are known for a relatively high thermal stability, and are even used as baking sheets, cupcake "tins" and the like, for use at temperatures up to about 250°C. This upper use temperature makes crosslinked silicone compositions good candidates for use as a base polymer for applications which require high thermal stability. However, when such conventional compositions are highly filled, their mechanical properties suffer, and when such compositions are employed as a thermal insulator in battery modules, the compositions cannot withstand the high temperatures involved for more than a very brief period of time. As a result, the temperatures observed on the side of the battery pack cover remote from the battery cells or modules, rapidly reach a very high value.

In the present invention, highly filled, sprayable, thixotropic, and crosslinkable organosilicon compositions are provided which, when applied to individual battery cells, modules, or battery packs as described below, provide a high level of thermal insulation which severely reduces heat flow from the cells or modules to areas outside of the upper and/or lower covers. During a high energy/high temperature event, rather than melt or burn, the organosilicon compositions ceramify to an insulative solid. Despite the high temperatures within the battery pack or module, the environment outside of the cover does not reach a temperature of 350°C for a considerable period of time, preferably eight to ten minutes or more. The present invention is directed to the organosilicon compositions themselves, to cells, modules and/or battery packs which contain an inventive organosilicon composition disposed between an upper and/or a lower cover enclosing the cells, modules, or battery pack, and also to a method of producing battery modules, battery packs, and similar structures by spraying the highly filled crosslinkable organosilicon composition onto battery cells and/or battery modules and curing the organosilicon composition, such that the cured composition lies between the active battery components and the upper cover and/or lower cover.

In the text which follows, the term "organosilicon composition" refers to the total composition, including fillers, which is applied by spraying onto components of the individual cells, the battery module or the battery pack. The term "organosilicon component" refers to compounds containing tetravalent silicon having hydrogen, hydroxyl groups, alkoxy groups, and organic groups, preferably alkyl and aryl groups, bonded to silicon atoms. These organosilicon components include, for example, but not by limitation, organosilanes, especially alkoxysilanes, and polyorganosiloxanes, commonly referred to as "silicones". The terms "organopolysiloxane" and "polyorganosiloxane" are synonyms herein, as is also the term "silicone". The term "a" with respect to a particular element, component, or step, means one or a plurality of such element, component, or step unless indicated to the contrary. The term "stopped" is synonymous with the term "terminated" and refers to a particular chemical group or moiety located at the end of an oligomeric or polymeric polyorganosiloxane chain or chain branch, i.e., in a so-called "M" siloxy unit. The term "thixotropic" is used in its conventional sense, as a composition with a non-Newtonian viscosity, the viscosity of which decreases with increasing shear rate and becomes high in the absence of shear. A composition which is "sprayable" can be applied by spraying or sputtering, as opposed to compositions which require the use of stiff brushes or trowels or the like for manual application. The term "ion battery" refers to a battery cell, module, etc., which relies on a reversible transition of a metal from an ionic state to a zero valent elemental state for purposes of storing electrical energy, such as but not limited to lithium ion batteries. The addition-curable and moisture-curable organosilicon compositions described herein are the same compositions used in the embodiments which are directed to battery modules and/or battery packs and methods used in their preparation.

By phrases such as "located between cells and/or modules and a cover" is meant that the inventive organosilicon compositions are positioned between the active components of the battery, e.g., battery cells and/or modules and the upper and/or lower covers, such that the organosilicon compositions are able to insulate the areas above and/or below the modules and/or battery pack from heat produced by a defective or damaged cell or cells. Additional layers or components may be present between the upper and/or lower covers and the organosilicon composition, and/or between the cells and/or modules and the organosilicon composition. In the curable compositions, the listed ingredients are those added during preparation of the compositions, and do not necessarily coincide with those present following storage. By the each terms "ATH-containing filler" and "aluminum trihydrate-containing filler" is meant an inorganic filler in particulate form which contains ATH (aluminum trihydrate), and which may contain additional particulate inorganic fillers as well. The ATH-containing filler does not include organic fillers such as polymer particles or polymer fibers in any significant amount..

In one embodiment, the present invention is directed to an electric vehicle battery assembly, comprising an array of a plurality of individual battery cells or modules, optionally but preferably a frame enclosing the array, a lower cover, an upper cover, and disposed between the array of a plurality of batteries or modules and the lower cover and/or the upper cover, a crosslinked organosilicon composition which comprises a sprayable and thixotropic, addition-curable or moisture-curable silicone composition comprising at least one polydimethylsiloxane, and containing greater than 50 weight percent and less than 85 weight percent of aluminum trihydrate-containing filler based on the total weight of the curable silicone composition, wherein aluminum trihydrate particles of the aluminum hydrate-containing filler comprise at least 30 weight percent of the organosilicon composition, a silicone thermal stabilizer, and at least one additive which promotes ceramification of the organosilicon composition on exposure to temperatures of 600°C or higher, wherein the crosslinked silicone composition reduces heat transfer from a side of the silicone composition nearest the array of a plurality of batteries to an opposing ("outer") side of the lower cover or the upper cover such that the opposing side of the respective cover does not reach a temperature of 350°C for a period of at least two minutes when the crosslinked silicone composition is exposed to a heat source having a temperature of greater than 850 °C positioned 2.5 cm away from the crosslinked silicone composition.

The present invention is also directed to an electric vehicle battery assembly as described above, wherein the battery assembly comprises a single module or a plurality of modules, each module containing a second plurality of individual battery cells.

The invention is further directed to an electric vehicle battery assembly as described above, wherein the sprayable, thixotropic organosilicon composition is an at least two component, addition-curable silicone composition, with a first component which is a vinyl-functional polyorganosiloxane having a viscosity less than 1000 mPa·s, present in an amount of from 20-70 weight percent based on the total weight of all organosilicon compounds; optionally, a polyorganosiloxane having a viscosity of less than 10,000 mPa·s, optionally silanol-stopped, in an amount of 20-40 weight percent based on the total weight of all organosilicon compounds; a silane adhesion promoter; a hydrosilylation catalyst; and optionally, a filler; and a second component, which contains at least one Si-H-functional crosslinker; optionally, one or more optionally silanol-stopped organopolysiloxanes having a viscosity of less than 10,000 mPa·s; optionally, one or more silane adhesion promoters; and optionally, a filler, wherein at least one of the components contains a filler comprising aluminum trihydrate, the total amount of filler present among all components being from 50 weight percent to 85 weight percent and sufficient aluminum trihydrate present in the filler(s) to provide at least 30 weight percent aluminum trihydrate based on the total weight of all components, wherein at least one component contains a silicone thermal stabilizer, at least one component contains a promoter of ceramification of the organosilicon composition, and wherein at least one of the components contains a silane adhesion promoter.

In a further embodiment of the invention, the sprayable, thixotropic organosilicon composition is a moisture-curable silicone composition comprising at least one silanol-stopped polyorganosiloxane having a viscosity of less than 10,000 mPa·s, in an amount greater than 90 weight percent weight percent based on the total weight of the organosilicon components of the organosilicon composition; a silicone thermal stabilizer; at least one additive which promotes ceramification of the organosilicon composition; optionally, water, preferably in the form of an emulsion, more preferably from 0.01-2 weight percent of an aqueous silicone emulsion containing about 40 weight percent of water or more; and from 50-85 weight percent of aluminum trihydrate-containing filler in an amount sufficient to supply at least 30 weight percent of aluminum trihydrate based on the total weight of the organosilicon composition. The moisture-curable organosilicon composition may consist of only a single "part" or "component", e.g. a so-called "RTV-1" composition, or may comprise multiple components, preferably two components, e.g. a so-called "RTV-2" composition. The latter is preferred, with water, preferably in emulsified form, contained in one of the two components.

The invention is further directed to a heat resistant crosslinkable organosilicon composition which is sprayable and thixotropic, comprising an addition-curable or moisture-curable silicone composition containing greater than 50 weight percent and less than 85 weight percent of aluminum trihydrate-containing filler based on the total weight of the curable silicone composition, sufficient to provide at least 30 weight percent aluminum trihydrate based on the total weight of the organosilicon composition, at least one silicone thermal stabilizer, and at least one additive which promotes ceramification of the organosilicon composition, wherein the crosslinkable silicone composition, following crosslinking to form a crosslinked silicone, reduces heat transfer from a side of the crosslinked silicone composition opposite a metal substrate on which the crosslinked silicone composition is coated to an opposing side of the metal substrate such that the opposing side of the metal substrate does not reach a temperature of 350°C or more for a period of at least two minutes when the side of the crosslinked silicone composition opposite the metal substrate is exposed to a heat source which causes the temperature of the exposed surface of the crosslinked silicone to rise above 600°C.

The invention is further directed to a sprayable, thixotropic, multiple-component addition-curable silicone composition comprising at least two components. A first component comprises a vinyl-functional polyorganosiloxane having a viscosity less than 1000 mPa·s, in an amount of from 20-70 weight percent based on the total weight of all organosilicon components, optionally, a polyorganosiloxane, preferably silanol-stopped, having a viscosity of less than 10,000 mPa·s, in an amount of less than 30 weight percent based on the total weight of all organosilicon components, a silane adhesion promoter, a hydrosilylation catalyst, and optionally a filler. A second component comprises an Si-H crosslinker, optionally, one or more organopolysiloxanes, preferably silanol-stopped, having a viscosity of less than 10,000 mPa·s, preferably in an amount of less than 30 weight percent based on the total weight of all organosilicon components, optionally, a silane adhesion promoter, and optionally a filler. At least one component of the multi-component composition contains a filler, the total amount of filler present among all components being from 50 weight percent to 85 weight percent, sufficient to provide at least 30 weight percent of aluminum trihydrate based on the total weight of the organosilicon composition. At least one component contains a silicone thermal stabilizer, at least one component contains a promoter of ceramification of the organosilicon composition at a temperature of 600°C or greater, and at least one component contains a silane adhesion promoter. The multi-component composition is preferably a two component composition.

The invention is also directed to a sprayable, thixotropic moisture-curable silicone composition of one or more, preferably one or two components (RTV-1, RTV-2), containing a silanol-stopped polyorganosiloxane having a viscosity of less than 10,000 mPa·s in an amount greater than 90 weight percent based on the total weight of the organosilicon components, an additive which promotes ceramification of the organosilicon composition at a temperature of 600°C or more, preferably from 0.01-2 weight percent of an aqueous silicone emulsion containing minimally 40 weight percent of water, a silicone thermal stabilizer, and from 50-85 weight percent of aluminum trihydrate-containing filler based on the total weight of the organosilicon composition, containing sufficient aluminum trihydrate to provide at least 30 weight aluminum trihydrate based on the total weight of the organosilicon composition. The moisture-curable silicone composition, following curing to form a crosslinked silicone composition, reduces heat transfer from a side of the crosslinked silicone composition opposite a metal substrate on which said crosslinked silicone composition is coated to an opposing side of said metal substrate such that the opposing side of the metal substrate does not reach a temperature of 350°C or more for a period of at least two minutes when the side of the crosslinked silicone composition opposite the metal substrate is exposed to a heat source having a temperature of 950°C positioned 2.5 cm from the surface of the crosslinked silicone.

The addition-curable organosilicon compositions contain an organopolysiloxane bearing ethylenically unsaturated moieties, preferably vinyl, omega-alkenyl, alkynyl, or allyl moieties, more preferably vinyl moieties, and an organopolysiloxane containing silicon-bonded hydrogen (Si-H "moieties" or "groups" or "radicals", all synonymous). The addition-curable organosilicon compositions also contain a hydrosilylation catalyst. In such compositions, as is well known to those skilled in the art, it is preferable that no single component contain ethylenic unsaturation, silicon-bonded hydrogen, and hydrosilylation catalyst simultaneously. If all three components are simultaneously present, premature crosslinking can occur. While inhibitors can be added to reduce premature crosslinking in single-component compositions, these are only partially successful. Very little crosslinking is needed before the viscosity of the composition rises to the level that it is no longer sprayable.

The polyorganosiloxanes bearing ethylenically unsaturated moieties are linear or very lightly branched or cyclic organopolysiloxanes which are composed predominantly of organosiloxy units of the formula (1)

RₐSiO_{(4-a)/2} (1),

Where a is 0, 1, 2, or 3, and R is a hydrocarbon or substituted hydrocarbon moiety such as those employed conventionally in the art, for example as disclosed in paragraphs [0023] to [0025] of US published Patent application 2017/0283559 A1, preferably an alkyl group having from 1-18 carbon atoms, more preferably 1-4 carbon atoms, and more preferably a methyl group; an alkenyl or alkynyl group having from 2-18 carbon atoms preferably 2-8 carbon atoms, where the ethylenic or ethylynic unsaturation is preferably terminally positioned remote from the silicon atom to which the group is attached, preferably a vinyl or allyl group, more preferably a vinyl group; a 6-14 carbon aryl group, alkaryl group, or arylalkyl group, preferably a phenyl group or phenylethyl group; or is a hydroxy or alkoxy group, the latter having preferably 1-4 carbon atoms, in particular methoxy or ethoxy groups. The hydrocarbon groups may be substituted by non-interfering substituents such as halogens or cyano groups, although this is not preferred. In the majority of organosiloxy units of the formula (1), the units are D units, where a is 2.

The polyorganosiloxanes bearing ethylenically unsaturated moieties, when linear or lightly branched, are terminated with so-called M groups of the formula (2)

R¹₃SiO_{1/2} (2)

Where R¹ each may be the same or different, and have the definitions of R. R¹ is preferably selected from methyl or vinyl. The most preferred M terminal units are trimethylsiloxy and vinyldimethylsiloxy units. Most preferred polyorganosiloxanes bearing ethylenically unsaturated moieties are polydimethylsiloxanes bearing vinyldimethylsiloxy terminal units. Also preferred are polyorganosiloxanes where the repeating units comprise units of the formula (1) where one R is an unsaturated hydrocarbon, preferably vinyl, and the other R is a saturated or aromatic hydrocarbon, preferably methyl. In this case, the terminal groups may also contain an ethylenically unsaturated group, or may be free of such groups.

The polyorganosiloxanes bearing ethylenically unsaturated groups must contain, on average, at least two of such groups. Furthermore, the polyorganosiloxanes bearing ethylenically unsaturated groups must have a viscosity of less than 1000 mPa·s, and a viscosity such that the overall organosilicon composition, including fillers, is both thixotropic and sprayable. Thixotropy may be assessed by standard Brookfield viscosity measurements, for example using a rotating cone and plate viscometer such as those available from AMETEK and BYK-Gardner. Measurements are taken at several different shear rates, for example but not by limitation, 0.1 s⁻¹, 1 s⁻¹, 10 s⁻¹ and optionally a higher shear rate as well (e.g. 192 s⁻¹) can establish thixotropic behavior by noting an apparent relatively large increase in viscosity at lower rotational speeds. In the past, measurements of viscosity at 4 s⁻¹ and 20 s⁻¹ were often compared and used to calculate a "thixotropic index". The degree of thixotropy required may vary somewhat from one battery construction to another, but is preferably sufficient that upon spraying the organosilicon composition onto the desired substrate, it rapidly adopts a configuration similar to that of a gel or even a solid. This behavior substantially prevents the organosilicon composition from flowing downwards under the force of gravity, away from its intended area of application, until it has had a chance to cure sufficiently. In the latter respect, full cure is not immediately required.

The polyorganosiloxanes bearing silicon-bonded hydrogen may be linear, lightly branched, or cyclic, and should also have a viscosity of preferably less than 1000 mPa·s, such that in combination with the other ingredients of the organosilicon composition, this composition remains sprayable and thixotropic. The polyorganosiloxanes bearing silicon-bonded hydrogen may contain M siloxy units of formula (3):

R²_{c}H_{(3-c)}SiO_{1/2} (3)

Where R² is a hydrocarbon bearing no ethylenic unsaturation, preferably those described for R above which contain no ethylenic unsaturation, and c is 0, 1, 2, or 3, preferably 1 or 2, most preferably 2.

The D units present correspond to the formula (4):

R²_{d}H_{(2-d)}SiO_{2/2} (4)

where d is 0, 1, or 2, and R² has the same meaning as in formula (3). Polyorganosiloxanes bearing silicon-bonded hydrogen preferably contain a substantial number of units of the formula (4) where d is 0 or 1 and also units of the formula (4) where d is 2. The linear or lightly branched polyorganosiloxanes bearing silicon-bonded hydrogen may contain silicon-bonded hydrogen exclusively at chain termini, may contain silicon-bonded hydrogen only along the chain of the polymer, or may contain silicon-bonded hydrogen in both locations. The viscosity of the Si-H-functional crosslinker can vary over a wide range, in particular, the crosslinker may have higher viscosities when the content of silicon-bonded hydrogen is higher, thus being present in the organosilicon composition in lesser amount at the same ratio of silicon bonded hydrogen to ethylenic unsaturation. The viscosity is preferably 10,000 mPa·s or lower, preferably 5000 mPa·s or lower, and most preferably 1000 mPa·s or lower. The silicon-bonded hydrogen content may range from 0.0002 to 1.7 weight percent, preferably 0.05 to 1.2 weight percent, and more preferably 0.1 to 1 weight percent. The silicon-bonded hydrogen -containing crosslinker should be present in a conventional amount, for example such to supply 0.1 to 15 silicon-bonded hydrogen atoms per ethylenically unsaturated group, preferably 0.5 to 4 silicon-bonded hydrogen atoms per ethylenically unsaturated group. Higher and lower amounts are suitable as well, depending upon the other constituents. The combination of ingredients, including the silicon-bonded hydrogencontaining crosslinker should be such that the organosilicon composition is both thixotropic and sprayable.

The addition curable organosilicon composition contains a hydrosilylation catalyst in at least one component. Hydrosilylation catalysts are well known and generally are noble metals or compounds or complexes thereof. The hydrosilylation catalysts are preferably compounds or complexes of platinum. Examples of suitable platinum catalysts include any catalyst hitherto used in compositions crosslinkable by addition of silicon-bonded hydrogen onto an aliphatic multiple bond. Preferably, components (D) comprise hydrosilylation catalysts from group 8, 9 or 10 of the Periodic Table. Thus, metals and their compounds such as platinum, rhodium, palladium, ruthenium and iridium, preferably platinum, can be used. The metals may if appropriate be fixed on finely divided support materials, such as activated carbon, metal oxides, alumina or silica.

Preferred hydrosilylation catalysts (D) are platinum and platinum compounds, more preferably platinum compounds which are soluble in polyorganosiloxanes. Soluble platinum compounds include, for example, the platinum-olefin complexes of the formulae (PtCl₂.olefin)₂ and ^{H}(PtCl₃.olefin), which preferably utilize alkenes of 2 to 8 carbon atoms, such as ethylene, propylene, isomers of butene and of octene, or cycloalkenes of 5 to 7 carbon atoms, such as cyclopentene, cyclohexene and cycloheptene. Useful soluble platinum catalysts further include the platinum-cyclopropane complex of the formula (PtCl₂C₃H₆)₂, the reaction products of hexachloroplatinic acid with alcohols, ethers and aldehydes or mixtures thereof, or the reaction product of hexachloroplatinic acid with methylvinylcyclotetrasiloxane in the presence of sodium carbonate in ethanolic solution. It is similarly possible to use platinum catalysts with phosphorus, sulfur and amine ligands, an example being (Ph₃P)₂PtCl₂. Particular preference for use as component (D) is given to complexes of platinum with vinylsiloxanes, such as sym-divinyltetramethyldisiloxane (Karstedt catalyst).

The amount of platinum catalyst employed should be sufficient to crosslink the addition-curable composition. Amounts ranging from 0.01 ppm to 1000 ppm, preferably 0.1 ppm to 200 ppm, and more preferably 20 ppm to 120 ppm, based on the weight of the organosilicon components are suitable, for example. If full cure is desired in a short period of time, higher amounts of catalyst can be used. If a slow cure is desired, lower amounts can be used, or higher amounts can be used in combination with an inhibitor, for example ethylynically unsaturated alcohols such as dehydrolinalool, organophosphines, organophosphites, and others well known to the skilled artisan, for example as disclosed in paragraphs [0054] and [0055] of US published application 2008/0006179 A1. Since the platinum catalysts will also function, in addition-curable compositions, as the ceramifying catalyst, it may be desired to employ somewhat higher amounts of catalyst than would ordinarily be used in addition-curable silicon compositions which are not designed to ceramify at high temperatures, for example 50 to 400 ppm, more preferably 50 to 200 ppm, based on the weight of the organosilicon components. Additionally, since it is generally undesired to heat ion battery cells, modules, or battery packs to elevated temperatures during manufacture, it is desirable that the amount of platinum catalyst employed will promote crosslinking at ambient temperatures, or slightly elevated temperatures below 50°C.

The organosilicon compounds of the moisture-curable organosilicon compositions of the present invention contain a silanol-stopped polyorganosiloxane, an alkoxysilane crosslinker, and when necessary, a condensation catalyst. In order to provide consistent and rapid crosslinking which might not be possible in environments having a very low relative humidity, it may be desirable to add water in finely divided form to the composition, for example in the form of an emulsion with an organopolysiloxane, thus requiring the use of a two component composition, with water being contained in a component supplied just prior to or during spraying of the composition, or being contained in a component not containing the crosslinker. Like the addition-curable compositions of the present invention, the moisture curable compositions are thixotropic and sprayable, and ceramify at elevated temperatures, due to the additional presence of a ceramifying catalyst.

The silanol-stopped polyorganosiloxanes of the moisture-curable organosilicon compositions are linear or very lightly branched or cyclic organopolysiloxanes which are composed predominantly of organosiloxy units of the formula (4):

R²ₑSiO_{(4-e)/2},

where e is 0, 1, 2, or 3, preferably 2, and R² is a hydrocarbon or substituted hydrocarbon moiety such as those employed conventionally in the art, for example as disclosed previously, preferably an alkyl group having from 1-18 carbon atoms, more preferably 1-4 carbon atoms, and more preferably a methyl group; an alkenyl or alkynyl group having from 2-18 carbon atoms preferably 2-8 carbon atoms, although these are neither necessary or preferred, and when present are preferably a vinyl or allyl group, more preferably a vinyl group; a 6-14 carbon aryl group, alkaryl group, or arylalkyl group, preferably a phenyl group or phenylethyl group; or is a hydroxy or alkoxy group, the latter having preferably 1-4 carbon atoms, in particular methoxy or ethoxy groups. At least two hydroxy groups are present. Hydroxy groups and alkoxy groups are preferably present together with one or two hydrocarbon groups as described above, in a terminal M group where e is 3. Terminal silanol groups constitute the "silanol-stopped" requirement of the silanol-stopped polyorganosiloxane. The hydrocarbon groups may be substituted by non-interfering substituents such as halogens or cyano groups, although this is not preferred. In the majority of organosiloxy units of the formula (4), the units are D units, where e is 2. Preferred silanol-stopped polyorganosiloxanes are linear polydimethylsiloxanes having dimethylsilanol terminal groups. It is preferable that the silanol-stopped polyorganosiloxanes contain hydrocarbon groups which are exclusively alkyl groups, preferably alkyl groups containing 1-4 carbon atoms, more preferably methyl groups or phenyl groups, most preferably methyl groups.

The silanol-stopped polyorganosiloxanes have a viscosity of less than or equal to 10,000 mPa·s at 25°C, more preferably less than or equal to 5000 mPa·s, yet more preferably less than or equal to 2000 mPa·s, and most preferably less than or equal to 1000 mPa·s. The amount and viscosity of the silanol-stopped polyorganosiloxanes is selected such that the organosilicon composition is thixotropic and sprayable. Higher viscosity silanol-stopped polyorganosiloxanes may also be used in conjunction with low viscosity silanol-stopped polyorganosiloxanes, as long as the requirements of thixotropy and sprayability are met.

The moisture-curable compositions contain a crosslinker. Crosslinkers for moisture-curable compositions are well known to those skilled in the art, and include alkoxysilanes, acetoxysilanes, oximinosilanes, and partial hydrolysis thereof. Alkoxysilanes are preferred due to environmental toleration of their volatile hydrolysis products, especially methanol and ethanol, as compared to, for example, acetic acid in the case of acetoxysilanes. Suitable crosslinkers are silanes bearing C₁₋₄ alkoxy groups, preferably methoxy or ethoxy groups, most preferably methoxy groups. Examples include tetramethoxysilane, tetraethoxysilane, methyltrimethoxysilane, methyltriethoxysilane, ethyltrimethoxysilane, ethyltriethoxysilane, propyltrimethoxysilane, vinyltrimethoxysilane, and vinyltriethoxysilane. Crosslinkers bearing C₁₋₄ alkoxy groups, preferably methoxy groups, and aminoalkyl groups such as aminoethyl groups, aminopropyl groups, aminoethylaminopropyl groups, and aminopropylaminoethyl groups are suitable, for example, and serve not only as crosslinkers, but also as co-catalysts and adhesion promoters in moisture curable compositions. Poly(aminoalkyl)-functional alkoxysilanes are also suitable. Examples of acetoxysilane crosslinkers are methyltriacetoxysilane, ethyltriacetoxysilane, and propyltriacetoxy silane.

Condensation catalysts are generally required. Such condensation catalysts are well known, and include, for example, bismuth compounds, titanic acid esters, and a particular tin compounds such as tin(II) acetate, tin(II) octoate, and tin(II) laurate. Other suitable condensation catalysts may be readily identified from the patent and scientific literature. If the moisture-curable organosilicon composition is exceptionally reactive, then it may be possible to avoid the presence of a condensation catalyst, or to limit the amount thereof to very low concentrations. When condensation catalysts are present, the amounts are, in general, 0.005 to 2 weight percent, preferably 0.01 to 1 weight percent, and more preferably 0.02 to 0.2 weight percent, based on the total weight of the organosilicon components.

An aqueous emulsion or water itself may be employed to accelerate the cure of the moisture-curable composition. When the aqueous emulsion or water is employed, it is added as a separate composition or in a component not simultaneously containing condensable polyorganosiloxanes, crosslinker(s), and condensation catalyst. The aqueous emulsion or water is conveniently mixed into the remaining crosslinkable composition through the use of a mechanical or static mixer just prior to spraying or during the spray application, i.e. in a component which precedes the sprayhead or which is contained as an integral component of the sprayhead itself. The actual component in place of mixing is of little importance except that the mixing should not take place sufficiently prior to spraying so that the composition does not prematurely begin curing and advance to a viscosity which is no longer sprayable.

The moisture-curing composition is most preferably a two component composition, with a first composition containing a silanol-stopped base polymer and emulsified water, and a second component containing the crosslinker and catalyst. The second component containing the crosslinker also generally contains a condensation catalyst and a functional or non-functional polyorganosiloxane, the latter being present in order that the second component can be used in larger amounts than would the crosslinker alone, to facilitate accurate metering, and may also contain an aminoalkyl-functional silane such as an aminoalkylalkoxysilane. Crosslinkers and multi-component crosslinker compositions are available commercially or can be readily formulated by one skilled in the art. The amount of the second component to be mixed into the first component depends substantially on the weight percentage of crosslinker contained in the second component, and this second component may be formulated to provide a volume mixing ratio of the first component to the second component which may vary over a wide range, for example 1:2 to 20:1, preferably 1:1 to 15:1. A suitable crosslinker is Wacker Catalyst T 77 which is especially recommended for use in volume ratios of 8:1 to 12:1. This crosslinker contains about 20-25 weight percent 1,2-bis(triethoxysilyl)ethane, 10-15 weight percent of an aminoalkylalkoxysilane, 5-10 weight carbon black, a polydimethylsiloxane, and 0.3-1.0 weight percent tin catalyst. Due to the use of relatively small portions of the second component relative to the first component, the second component may be in the form of a highly viscous or even pasty composition prior to admixture with the first component. Thus, this second component may employ polyorganosiloxanes, including silanol-stopped polyorganosiloxanes which have a much higher molecular weight than would be recommended for use in the first component. However, when the second component is used in large proportions, e.g. 1:1 or 2:1, then the second component must also have a relatively low viscosity in order that the composition remain sprayable. In compositions where the second component is present in larger amounts, the pot life and curing time are reduced. The ultimate pot life and curing times are not solely a function of the second component, however, but also depend significantly on the makeup of the first component, including the amount of silanol-stopped polymer and whether emulsified water is present or absent. In the case of the manufacture of battery modules and/or battery packs, it is generally desirable for a very rapid rate of cure in order that the assembly time per module or per battery pack is reduced as much as possible.

There are several components which are common to both the addition-curable organo- silicon compositions and the moisture-one curable organo- silicon compositions, or are optional in both of these compositions. These components include the ATH-containing filler, which is necessary in both types of compositions; an adhesion promoter, which is necessary in the addition-curable composition, but which may also be present in the moisture-curable composition over and above the alkoxysilane crosslinkers which are also present, and which may also improve the organic/inorganic interface; low viscosity polyorganosiloxane diluents which are optional in both components to lower viscosity and enhance sprayability; biocides which are an optional component in both compositions employed to combat microbial growth during storage; a stabilizer in both types of compositions for stabilizing the organosilicon component with respect to exposure to high temperature; and organic solvents which are not preferred and are preferably absent, but which may be used to lower system viscosity.

The ATH-containing filler is an integral part of the present composition. The ATH-containing filler is present in both compositions in an amount of 50-85 weight percent based on the total weight of the sprayable, thixotropic organosilicon composition. The portion of the ATH-containing filler which is ATH, must be sufficient to provide at least 30 weight percent ATH based on the total weight of the organosilicon composition, preferably at least 40 weight percent, more preferably at least 50 weight percent, yet more preferably at least 60 weight percent, still more preferably at least 70 weight percent, and most preferably at least 80 weight percent. Most preferably, the entire ATH-containing filler consists only of ATH.

The aluminum trihydrate (ATH) is in particulate form and has a mean particle size which is less than 300 µm, preferably less than 200 µm, and most preferably less than 100 µm. The mean particle size is preferably greater than 10 µm, more preferably greater than 20 µm. The ATH has a BET surface area of less than 20 m²/g, more preferably less than 10 m²/g, and preferably greater than 0.5 m²/g, more preferably greater than 0.8 m²/g. ATH is available from numerous sources worldwide, including the RJ Marshall company, Huber, and others.

The ATH may be untreated, or may be hydrophobicized. It has been found that the use of hydrophobicized ATH is effective in reducing viscosity such that the organosilicon composition is flowable and preferably sprayable. ATH may be supplied in a form which is already hydrophobicized, or may be hydrophobicized in situ, for example by including a reactive polyorganosiloxane or silane which will react with surface hydroxyl groups after addition to the organosilicon composition. ATH may also be hydrophobicized by coating with natural or synthetic waxes, fatty acids, fatty acid salts, fatty acid esters, and other similar hydrophobic compounds which are well known to those skilled in the art. A preferable hydrophobic ATH is HYMOD^{®} SB36 SG, having an aluminum hydroxide content of about 99.6 weight percent, a mean particle size of approximately 36 µm, and a BET surface area of 1.0 m²/g, available from Huber.

Fillers other than ATH which are present in the sprayable, thixotropic organosilicon composition include metal carbonates such as magnesium carbonate and calcium carbonate, magnesium hydroxide, silica, titanium dioxide, and other insoluble or poorly soluble metal oxides. With respect to such fillers, it is important to assess the effect of the filler on the thermal properties of the cured organosilicon composition as well as the effect of the filler on the viscosity and thixotropy of the organosilicon composition. It is preferred to avoid fillers having a relatively high cost such as titanium dioxide. Fillers such as carbonates may be synthetic carbonates or natural carbonates such as those derived from limestone, marble, or dolomite. Some fillers, such as zinc oxide, may be added in small amounts to increase the thixotropic nature of the composition. Mica, in expanded or non-expanded form, asbestos, talc, wollastonite, and other naturally occurring fillers are also suitable. The same is true of pyrogenic fillers such as pyrogenic silica and pyrogenic titania, which are available in very small particle sizes with correspondingly high BET surface areas. Preferably, however, the BET surface area of the additional fillers, especially when used in amounts greater than about 3 weight percent based on the total weight of the organosilicon composition, should have the same general size and BET surface area as is the case for the ATH particles discussed previously. The additional fillers may be used as prepared, i.e., non-hydrophobic, may be supplied as a hydrophobic filler by appropriate surface modification, or may be hydrophobicized *in situ.* Inorganic fillers in the form of microballoons may also be used. Such microballoons are generally composed of glass or ceramic materials, and preferably have particle sizes in the same range as the ATH fillers. Like the other non-ATH fillers, inorganic microballoons are available commercially from numerous sources. In selecting a non-ATH filler, the filler density is also a consideration when used in quantities larger than 10 weight percent based on the total weight of the organosilicon composition.

The amount of non-ATH filler may range from 0.0 weight percent up to about 55 weight percent, with 55 weight percent being a preferred upper limit, preferably from greater than 0.0 to about 20 weight percent, and more preferably from greater than 0.0 to about 10 weight percent.. Too large a quantity of non-ATH filler may result in reduced thermal performance.

Both the addition-curable and moisture-curable organosilicon compositions contain a ceramifying catalyst which promotes conversion of the organosilicon compositions to a porous ceramic material at high temperatures, preferably temperatures in the neighborhood of 600°C or higher, for example 800°C to 900°C. The composition of the ceramifying catalyst may vary, as long as ceramification is achieved. However, the ceramifying catalyst is preferably a platinum compound, such as those disclosed earlier. In the addition-curable organosilicon compositions of the invention, the platinum hydrosilylation catalyst serves the dual function of catalyzing the cure of the organosilicon composition by hydrosilylative crosslinking, and since the platinum catalyst is not removed, but remains in the composition, it also serves as the ceramifying catalyst. In moisture-curable compositions, it is necessary to add a ceramifying catalyst, since moisture-curable compositions do not require a platinum catalyst for crosslinking. In the case of moisture-curable compositions, the same platinum catalysts as described above may be used, in the amounts previously set forth.

Both the addition-curable organosilicon compositions and the moisture-curable organosilicon compositions contain a thermal stabilizer for silicones. The thermal stabilizer is present in minor amounts, for example from 0.1 weight percent to 3 weight percent, preferably from 0.5 weight percent to 2 weight percent, and more preferably from 0.5 to 1.8 weight percent, and most preferably from 0.5 to 1 weight percent, based on the total weight of the organosilicon composition. A suitable thermal stabilizer is particulate titanium dioxide, preferably supplied as a dispersion in a polyorganosiloxane. The amount of titanium dioxide is not sufficient to render the composition reflective, and this is particularly so when inorganic dark-colored pigments such as black pigmentary iron oxide are also present. The silicone thermal stabilizer extends the upper use temperature of the silicone.

Inorganic pigments are an optional component in both addition-curable and moisture-curable organosilicon compositions. Organic pigments should in principle be avoided, since these are generally combustible. Suitable inorganic pigments are in particular metal oxides of metals other than titanium, for example iron oxides. Pigmentary iron oxides are available in a variety of colors ranging from yellow through red to black. Black iron oxide pigments are particularly suitable. These pigments are provided in amounts of 0.1 weight percent to five weight percent based on the total weight of the organosilicon composition, preferably 0.5 to 4 weight percent, and most preferably from 0.8 to 2 weight percent, these weight percents based upon a 20 weight percent dispersion of the pigment in organopolysiloxane, preferably a vinyl-functional organopolysiloxane.. A suitable pigment dispersion is SILCOPAS 220 black available from Avient.

Both the addition-curable and moisture-curable organosilicon compositions may contain an adhesion promoter. In moisture-curable compositions, the alkoxysilane crosslinker may serve as an adhesion promoter. Since alkoxysilanes are not necessary components in addition-curable compositions however, in these compositions it may be necessary to add them as an adhesion promoter, or, in either type of composition, to add separate adhesion promoters. These adhesion promoters preferably contain reactive and/or polar groups such as glycidyl groups, acrylo groups, aminoalkyl groups, and the like. Examples include GENIOSIL GF 80, (3-glycidoxypropyltrimethoxysilane), MAPTMO silane (N-methyl-3-aminopropyltrimethoxysilane), GENIOSIL GF 91 (N-(2-aminoethyl)-3-aminopropyltrimethoxysilane, methacryloyloxypropyltrimethoxysilane, acetoxysilanes, and the like. Partial hydrolysates of these silane adhesion promoters may also be used. When present as a separate component, the adhesion promoters are preferably present in amounts of 0.1 to 5 weight percent based on the total weight of the organosilicon composition, more preferably 0.2 to 4 weight percent, and yet more preferably 0.2 to 3 weight percent.

The materials used for the upper and lower covers, frame, and other parts of battery modules and/or battery packs are conventional, and to reduce flammability, are generally made of metal, for example conventional steel, stainless steel, or aluminum. For reasons of cost, stainless steel is not preferred. For reasons of reducing vehicle weight, aluminum is most preferred. In modern automotive vehicle components, many metal parts are painted or otherwise coated to provide, in particular, corrosion resistance. An electrocoating process is ordinarily used. While such coatings are exceptionally useful in preventing corrosion, caution must be exercised, when such coatings are used, to assess the effect of the coating on the thermal characteristics of the battery modules and/or battery pack. For example, but without limitation, it has been found that certain electrocoatings markedly lower the thermal resistance supplied by the inventive organosilicon compositions. Thus, it is important, when testing thermal conductivity, to use the actual material which will be used in production. It has been particularly found that aluminum covers which are not electrocoated, are particularly suitable in extending the time at which the exposed surface of the cover reaches an unacceptable temperature. Electrocoated top and bottom (exterior) surfaces of the top and bottom covers are generally not problematic.

The organosilicon compositions are sprayable as a result of being relatively low viscosity fluids at reasonable amounts of shear. These characteristics also allow for coating methods which are unique to flowable compositions such as doctor blade coating, spin coating, and the like. However, since many of the components of battery modules and/or battery packs are nonplanar, and thus not suitable for these methods of application, it is highly preferred that the compositions are sprayable. In order to be sprayable, the viscosity must be relatively low at the shear experienced in spray nozzles. In this respect, it is possible to use a directed spray created by impinging the organosilicon composition onto a spinning disk or the like, but it is preferred that conventional spray equipment be utilized. Such equipment is readily capable of spraying compositions having viscosities up to about 30,000 mPa·s or somewhat more. When the viscosity exceeds about 20,000 mPa·s, while spraying is possible, it becomes difficult. Due to the large content of filler in the inventive organosilicon compositions, it is quite surprising that the compositions are sprayable. The viscosities of the organosilicon compositions at low levels of shear are quite high, for example as high as 35,000 mPa·s or more at 0.5 s⁻¹, and even higher at rest. However, because the compositions are thixotropic, e.g. shear-thinning, they are still capable of being sprayed effectively. To further increase sprayability, or to allow for spraying of more viscous compositions, the spray equipment may be equipped with ultrasonic transducers to lower the local viscosity near the spray head. Both high pressure and low pressure sprayers may be used, with or without the flow of air or other gas. The thickness of the applied coating, prior to curing, is preferably between 0.2 and 5 mm, more preferably between 0.5 and 2.5 mm. The thickness of coating following curing is substantially the same as the thickness prior to curing. Preferably, the viscosity at 200 s⁻¹ is less than 10,000 mPa·s, more preferably less than 7000 mPa·s, yet more preferably less than 5000 mPa·s, and most preferably less than 4000 mPa·s.

Preferably, the organosilicon compositions are sprayed onto the underside of the top cover of the battery module and/or battery pack, which is preferably an aluminum sheet material. The sprayed organosilicon compositions begin to cure immediately, and may be significantly or fully cured prior to assembling the cover onto the remaining battery components, or the cover and the applied organosilicon composition may be placed over the remaining components while in a very low state of cure. In the case where the curing organosilicon composition is still tacky on its surface, applying the cover to the remaining components prior to full cure may enhance the mechanical strength of the battery module and/or battery pack.

The invention will now be illustrated by the following non-limiting examples. Composition viscosities are measured at room temperature or 25°, and may be assessed, for example, as disclosed in ISO 3219. based on the examples which follow and the preceding discussion, one of ordinary skill in the art is enabled to produce a wide variety of compositions which are flowable, preferably sprayable, and thixotropic, containing the required amounts of ATH-containing filler, and suitable for producing a thermal insulation for metal ion batteries. All parts described herein are parts by mass. All percentages described herein are percents by mass.

### Example 1

An addition-curable organo- silicon composition is prepared as a two component composition.

The first component is prepared by admixing 4 parts GENIOSIL^{®} GF 80; 1 part MAPTMO silane; 24 parts of VIPO 120, a vinyl functional polymer available from Wacker Chemie having a viscosity of 120 mPa·s; 5.2 parts SILCOPAS 220 Fe₃O₄ iron oxide dispersion in vinyl-functional polyorganosiloxane; 0.8 parts POLYMER VI-P-5, an oligomeric vinyl-functional polyorganosiloxane having on average about 3 vinyl groups per molecule available from Wacker Chemie; 0.8 parts CATALYST EP, a platinum catalyst in vinyl-functional polydimethylsiloxane available from Wacker Chemie; 130 parts of Huber SB-36 SG ATH; 4 parts of a silicone thermal stabilizer containing approximately 34 weight percent of titanium dioxide dispersed in 40 weight percent of a vinyl functional organopolysiloxane having a viscosity of approximately 1100 mPa·s, also containing a minor amount of a platinum catalyst solution and GENIOSIL^{®} GF 91; 3 parts hexadecyltrimethoxysilane; and 10 parts of a silanol-stopped polydimethylsiloxane having a viscosity of about 1000 mPa·s.

The second component is prepared by admixing eight parts of an Si-H-functional polydimethylsiloxane crosslinker containing 0.77 weight percent silicon bonded hydrogen; 3 parts GENIOSIL GF 80; 1 part MAPTMO silane; 9.8 parts of an Si-H-functional polydimethylsiloxane crosslinker containing approximately 0.15 weight percent silicon-bonded hydrogen; 12 parts VIPO 120, a vinyl-functional polyorganosiloxane having a viscosity of approximately 120 mPa·s; 130 parts Huber SB-36 SG ATH; 3 parts hexadecyltrimethoxysilane; 10 parts of a silanol-stopped polydimethylsiloxane having a viscosity of approximately 1000 mPa·s; and 4 parts of the silicone thermal stabilizer employed in the first component.

The two components are supplied separately to a static mixer located immediately prior to a spray head and sprayed onto a 0.6 mm aluminum substrate at a thickness of approximately 4 mm. The coated sheet is secured by welders' clamps in a vertical position, and a propane burner having a flame temperature in the range of 850-1000°C is positioned 2.5 cm from the silicone surface. The temperature on the opposing side of the sheet is measured using an FLIR autofocus thermal imaging camera which is useful for measuring temperatures in the range of 0-650°C, with an accuracy of approximately ± 2°C. The exterior side of the panel does not reach 350°C even after eight minutes, whereas a similar panel constructed of electrocoated steel, having no organosilicon composition deposited thereon, reaches this temperature in less than 10 seconds. Examination of the organosilicon coating following this exposure to high temperature above 600°C shows the presence of a black, porous ceramic material. The organosilicon composition provides surprisingly effective thermal insulation at the high temperatures involved.

### Example 2

A moisture-curable first component is prepared by admixing 6.3 parts by weight of the silicone thermal stabilizer used in Example 1; 255.5 parts ATH, 0.85 parts of an emulsion of about 35 weight percent water dispersed in silicone, and 115.6 parts of a silanol-stopped polydimethylsiloxane having a viscosity of approximately 1000 mPa·s. The second component is Wacker Catalyst T 77 available from Wacker Chemie, used in a ratio of the first component to the second component of 10:1. The admixed components are sprayable, and are sprayed onto a panel in a fashion similar to that in Example 1. When subjected to the same flame test as used in Example 1, the opposing side of the panel does not reach 350°C for more than eight minutes.

Measured room temperature viscosities for the first component (without catalyst) are 38,000 mPa·s at a shear rate of 0.5 s⁻¹, 15,000 mPa·s at 5 s⁻¹, 13,700 mPa·s at 10 s⁻¹, and 4490 mPa·s at 192 s⁻¹. The second component has a 0.5 s⁻¹ viscosity of about 200,000 mPa·s. The viscosities of the mixed first and second components, measured shortly after mixing, are 43,600 mPa·s at a shear rate of 0.5 s⁻¹, 15,500 mPa·s at 5 s⁻¹, 13,800 mPa·s at 10 s⁻¹, and 6160 mPa·s at 192 ^{s-1}. Note the very high viscosity at low shear rates, which reduce by a factor of about 6 at a shear rate of 192 s⁻¹.

## Claims

1. An electric vehicle battery assembly, comprising:
a) an array of a plurality of individual metal ion batteries;
b) optionally, a frame laterally surrounding the array of the plurality of individual metal ion batteries;
c) optionally, a lower cover;
d) an upper cover; and
e) disposed between the array of a plurality of batteries and at least one of the lower cover and/or upper cover, a crosslinked, sprayable and thixotropic addition-curable or moisture-curable silicone composition comprising greater than 50 weight percent and less than 85 weight percent of aluminum trihydrate-containing filler based on the total weight of the curable silicone composition, aluminum trihydrate particles of the filler comprising at least 30 weight percent of the curable silicone composition, and at least one ceramifying additive which promotes ceramification of the crosslinked silicone composition on exposure to temperatures of 600 °C or higher,
wherein the crosslinked silicone composition reduces heat transfer from a surface of the crosslinked silicone composition nearest the array of a plurality of batteries to an outside surface of said lower cover or said upper cover bearing the crosslinked silicone composition, such that the outside surface does not reach a temperature of 350°C for a period of at least two minutes when the surface of the crosslinked silicone composition nearest the array of a plurality of batteries is exposed to a heat source having a temperature greater than 850°C, positioned 2.5 cm from the surface of the organosilicon composition, and when determined in accordance with the method outlined in the description.

2. The electric vehicle battery assembly of claim 1, wherein the array of a plurality of individual batteries is in the form of battery modules, each module containing a second plurality of individual batteries, and the organosilicon composition is applied to the top cover of the battery assembly.

3. The electric vehicle battery assembly of claim 1, wherein the sprayable, thixotropic silicone composition is an at least two component, addition-curable silicone composition, comprising:
a) a first component, comprising:
i) at least one vinyl-functional polyorganosiloxane having a viscosity less than 4000 mPa·s, preferably less than 1000 mPa·s, in an amount of from 20-70 weight percent based on the total weight of all organosilicon compounds;
ii) optionally, one or more silanol-stopped polyorganosiloxanes or non-functional polyorganosilanes having a viscosity of less than 10,000 mPa·s, preferably less than 1000 mPa·s, in an amount of 20-40 weight percent based on the total weight of all organosilicon compounds;
iii) at least one silane adhesion promoter;
iv) at least one hydrosilylation catalyst;
v) optionally, a filler; and
b) a second component, comprising:
i) at least one Si-H-functional crosslinker;
ii) optionally one or more silanol-stopped organopolysiloxanes or non-functional polyorganosiloxanes having a viscosity of less than 10,000 mPa·s, preferably less than 1000 mPa·s;
iii) optionally, one or more silane adhesion promoters;
iv) optionally, a filler,
wherein at least one of the first and second components contains a filler comprising aluminum trihydrate, the total amount of filler present among all components being from 50 weight percent to 85 weight percent and aluminum trihydrate being present in the filler(s) in an amount sufficient to provide at least 30 weight percent aluminum trihydrate, preferably at least 50 weight percent aluminum trihydrate, more preferably at least 70 weight percent aluminum trihydrate, and most preferably at least 80 weight percent aluminum trihydrate, based on the total weight of all components; a silicone thermal stabilizer; and wherein at least one component contains said ceramifying additive, preferably a ceramifying additive containing platinum; and wherein at least one of the components contains a silane adhesion promoter,
where viscosity is determined in accordance with the method outlined in the description.

4. The electric vehicle battery assembly of claims 1 or 3, further comprising up to 5 weight percent of a thermal stabilizer composition comprising titanium dioxide.

5. The electric vehicle battery assembly of claims 1 or 2, wherein the sprayable, thixotropic silicone composition is a moisture-curable silicone composition, comprising;
i) at least one silanol-stopped polyorganosiloxane having a viscosity of less than 10,000 mPa·s, in an amount greater than 90 weight percent based on the total weight of the organosilicon components;
ii) at least one ceramifying additive which promotes ceramification of the organosilicon composition;
iii) optionally from 0.01-2 weight percent of an emulsion of water and silicone;
iv) at least one alkoxysilane crosslinker;
v) optionally, an adhesion promoter different from component iv); and
iv) from 50-85 weight percent of aluminum trihydrate-containing filler in an amount sufficient to supply at least 30 weight percent of aluminum trihydrate based on the total weight of the silicone composition, and
v) at least one thermal stabilizer,
where viscosity is determined in accordance with the method outlined in the description.

6. The electric vehicle battery assembly of claim 5, wherein the moisture-curable silicone composition is an at least two component composition, one component comprising an emulsion of water and silicone and a silanol-stopped organopolysiloxane, and a second component comprising an alkoxysilane crosslinker.

7. The electric vehicle battery assembly of claim 5, wherein the silicone thermal stabilizer comprises titanium dioxide, in an amount sufficient to supply from 0.1 to 3 weight percent of titanium dioxide based on the total weight of the silicone composition, preferably from 0.2 to less than 2 weight percent of titanium dioxide.

8. A heat resistant crosslinkable organosilicon composition useful for manufacturing the metal ion vehicle battery assemblies of claim 1, which is sprayable and thixotropic, comprising:
an addition-curable or moisture-curable silicone composition containing greater than 50 weight percent and less than 85 weight percent of aluminum trihydrate-containing filler based on the total weight of the curable silicone composition, and sufficient to provide at least 30 weight percent aluminum trihydrate, preferably at least 50 weight percent aluminum trihydrate, more preferably at least 70 weight percent aluminum trihydrate, and most preferably at least 80 weight percent of aluminum trihydrate based on the total weight of the organosilicon composition, a silicone thermal stabilizer, and at least one ceramifying additive which promotes ceramification of the organosilicon composition,
wherein the curable silicone composition, following crosslinking to form a crosslinked silicone, reduces heat transfer, from a side of a metal substrate on which said crosslinked silicone composition is coated, to an opposing side of said metal substrate, such that the opposing side of the metal substrate does not reach a temperature of 350°C or more for a period of at least two minutes when the side of the crosslinked silicone composition opposite the metal substrate is exposed to a heat source which causes the temperature of the surface of the crosslinked silicone to rise above 600 °C, when determined in accordance with the method outlined in the description.

9. The heat resistant crosslinkable organosilicon composition of claim 8 which is a sprayable thixotropic multiple-component addition-curable silicone composition comprising at least two components as follows:
a) a first component, comprising:
i) at least one vinyl-functional polyorganosiloxane having a viscosity less than 4000 mPa·s, preferably less than 1000 mPa·s, in an amount of from 20-70 weight percent based on the total weight of all organosilicon components;
ii) optionally, at least one silanol-stopped polyorganosiloxane or non-functional polyorganosiloxane having a viscosity of less than 10,000 mPa·s, preferably less than 1000 mPa·s, in an amount of less than 30 weight percent based on the total weight of all organosilicon compounds;
iii) optionally, a silane adhesion promoter;
iv) at least one hydrosilylation catalyst;
v) optionally, a filler; and
b) a second component, comprising:
i) at least one Si-H crosslinker;
ii) optionally, one or more silanol-stopped organopolysiloxanes or non-functional organopolysiloxanes having a viscosity of less than 10,000 mPa·s, preferably less than 1000 mPa·s, in an amount of less than 30 weight percent based on the total weight of all organosilicon components;
iii) optionally, one or more silane adhesion promoters;
iv) optionally, a filler,
wherein at least one component contains an aluminum trihydrate-containing filler, the total amount of aluminum trihydrate-containing filler present among all components being from 50 weight percent to 85 weight percent, and sufficient to provide at least 30 weight percent of aluminum trihydrate, preferably at least 50 weight percent of aluminum trihydrate, more preferably at least 70 weight percent of aluminum trihydrate, and most preferably at least 80 weight percent of aluminum trihydrate, based on the total weight of the curable silicone composition; at least one component contains a ceramifying additive which promotes ceramification of the organosilicon temperatures at a temperature of 600 C or greater, at least one component comprises a silicone thermal stabilizer comprising titanium dioxide, and at least one component contains a silane adhesion promoter,
where viscosity is determined in accordance with the method outlined in the description.

10. A sprayable, thixotropic, moisture-curable organosilicon composition, suitable for manufacturing the metal ion vehicle batter assemblies of claim 1, comprising:
i) at least one silanol-stopped polyorganosiloxane having a viscosity of less than 10,000 mPa·s, preferably less than 1000 mPa·s, in an amount greater than 90 weight percent based on the total weight of organosilicon components of the organosilicon composition;
ii) a silicone thermal stabilizer; and
iii) at least one ceramifying additive which promotes ceramification of the organosilicon composition at a temperature of 600 °C or more;
iv) optionally, from 0.01-2 weight percent of an emulsion of silicone and water; and
v) from 50-85 weight percent of aluminum trihydrate-containing filler based on the total weight of the organosilicon composition, containing sufficient aluminum trihydrate to provide at least 30 weight aluminum trihydrate, preferably at least 50 weight percent aluminum trihydrate, more preferably at least 70 weight percent aluminum trihydrate, and most preferably at least 80 weight percent aluminum trihydrate, based on the total weight of the organosilicon composition,
wherein the moisture-curable organosilicon composition, following curing to form a crosslinked silicone composition, reduces heat transfer from a side of a metal substrate on which said crosslinked silicone composition is coated to an opposing side of said metal substrate such that the opposing side of the metal substrate does not reach a temperature of 350°C or more for a period of at least two minutes, preferably at least five minutes, and more preferably at least 8 minutes, when the side of the crosslinked silicone composition opposite the metal substrate is exposed to a heat source having a temperature of 850°C positioned 2.5 cm from the surface of the crosslinked silicone,
where viscosity is determined in accordance with the method outlined in the description.

11. The moisture-curable organosilicon composition of claim 10, wherein the moisture-curable silicone composition is an at least two component composition, one component comprising an emulsion of water in silicone and a silanol-stopped organopolysiloxane, and a second component comprising an alkoxysilane crosslinker and a condensation catalyst.

12. The organosilicon composition of any of claims 9 or 10, wherein the silicone thermal stabilizer comprises titanium dioxide, in an amount sufficient to supply from 0.1 to 3 weight percent of titanium dioxide based on the total weight of the organosilicon composition, preferably from 0.2 to less than 2 weight percent of titanium dioxide.

13. A method for the manufacture of a metal ion battery module and/or battery pack of claim 1 or 2, comprising:
a) assembling a plurality of individual metal ion battery cells into a battery module, and optionally assembling a plurality of said battery modules into a battery pack;
b) providing at least a top metal cover dimensioned to enclose at least a top surface of the battery module and/or battery pack, and optionally a bottom metal cover dimensioned to enclose at least a bottom surface of the battery module and/or battery pack;
c) applying to at least the top metal cover, a flowable and sprayable, thixotropic crosslinkable organosilicon composition comprising addition-curable organosilicon components or moisture-curable organosilicon components, and an aluminum trihydrate-containing filler in an amount of from 50-85 weight percent based on the total weight of the organosilicon composition, the amount of the aluminum trihydrate-containing filler and the aluminum trihydrate-proportion of the aluminum trihydrate-containing filler being such so as to supply at least 30 weight percent aluminum trihydrate, more preferably at least 50 weight percent aluminum trihydrate, yet more preferably at least 70 weight percent aluminum trihydrate, and most preferably at least 80 weight percent aluminum trihydrate based on the weight of the organosilicon composition, and further comprising a silicone thermal stabilizer and at least one ceramifying additive;
d) mounting the top metal cover over the plurality of metal ion battery cells or battery modules,
wherein the crosslinkable organosilicon composition, following crosslinking to form a crosslinked silicone, reduces heat transfer from a side of the metal substrate on which said crosslinked silicone composition is coated to an opposing side of said metal substrate, such that the opposing side of the metal substrate does not reach a temperature of 350°C or more for a period of at least two minutes when the side of the crosslinked silicone composition opposite the metal substrate is exposed to a heat source which causes the temperature of the crosslinked silicone to rise above 600 °C, when determined in accordance with the method outlined in the description.

14. An ion battery module or battery pack, prepared by the method of claim 13.

## Patentansprüche

1. Elektrofahrzeugbatteriebaugruppe umfassend:
a) eine Anordnung einer Vielzahl von einzelnen Metallionenbatterien;
b) gegebenenfalls einen Rahmen, der die Anordnung der Vielzahl von einzelnen Metallionenbatterien lateral umgibt;
c) gegebenenfalls eine untere Abdeckung;
d) eine obere Abdeckung; und
e) zwischen der Anordnung einer Vielzahl von Batterien und wenigstens einer von der unteren Abdeckung und/oder der oberen Abdeckung angeordnet eine vernetzte, sprühbare und thixotrope additionshärtbare oder feuchtigkeitshärtbare Siliconzusammensetzung, die mehr als 50 Gewichtsprozent und weniger als 85 Gewichtsprozent an Aluminiumtrihydrat-enthaltendem Füllstoff, bezogen auf das Gesamtgewicht der härtbaren Siliconzusammensetzung, umfasst, wobei Aluminiumtrihydratpartikel des Füllstoffs wenigstens 30 Gewichtsprozent der härtbaren Siliconzusammensetzung umfassen, und wenigstens ein keramisierendes Additiv, das Keramisierung der vernetzten Siliconzusammensetzung bei Exposition gegenüber Temperaturen von 600 °C oder höher fördert,
wobei die vernetzte Siliconzusammensetzung Wärmeübertragung von einer Oberfläche der vernetzten Siliconzusammensetzung, die der Anordnung einer Vielzahl von Batterien am nächsten liegt, zu einer Außenfläche der unteren Abdeckung oder der oberen Abdeckung, die die vernetzte Siliconzusammensetzung trägt, verringert, so dass die Außenfläche eine Temperatur von 350 °C für einen Zeitraum von wenigstens zwei Minuten nicht erreicht, wenn die Oberfläche der vernetzten Siliconzusammensetzung, die der Anordnung einer Vielzahl von Batterien am nächsten liegt, gegenüber einer Wärmequelle mit einer Temperatur von mehr als 850 °C exponiert wird, die 2,5 cm von der Oberfläche der Organosiliciumzusammensetzung angeordnet ist, wenn bestimmt gemäß dem in der Beschreibung beschriebenen Verfahren.

2. Elektrofahrzeugbatteriebaugruppe nach Anspruch 1, wobei die Anordnung einer Vielzahl von einzelnen Batterien in Form von Batteriemodulen vorliegt, wobei jedes Modul eine zweite Vielzahl von einzelnen Batterien enthält und die Organosiliciumzusammensetzung auf die obere Abdeckung der Batteriebaugruppe aufgebracht ist.

3. Elektrofahrzeugbatterieanordnung nach Anspruch 1, wobei die sprühbare thixotrope Siliconzusammensetzung eine wenigstens zweikomponentige additionshärtbare Siliconzusammensetzung ist, umfassend:
a) eine erste Komponente umfassend:
i) wenigstens ein vinylfunktionelles Polyorganosiloxan mit einer Viskosität von weniger als 4000 mPa·s, vorzugsweise weniger als 1000 mPa·s, in einer Menge von 20-70 Gewichtsprozent, bezogen auf das Gesamtgewicht aller Organosiliciumverbindungen;
ii) gegebenenfalls ein oder mehrere silanolgestoppte Polyorganosiloxane oder nichtfunktionelle Polyorganosilane mit einer Viskosität von weniger als 10.000 mPa·s, vorzugsweise weniger als 1000 mPa·s, in einer Menge von 20-40 Gewichtsprozent, bezogen auf das Gesamtgewicht aller Organosiliciumverbindungen;
iii) wenigstens einen Silan-Haftvermittler;
iv) wenigstens einen Hydrosilylierungskatalysator;
v) gegebenenfalls einen Füllstoff; und
b) eine zweite Komponente umfassend:
i) wenigstens einen Si-H-funktionellen Vernetzer;
ii) gegebenenfalls ein oder mehrere silanolgestoppte Organopolysiloxane oder nichtfunktionelle Polyorganosiloxane mit einer Viskosität von weniger als 10.000 mPa·s, vorzugsweise weniger als 1000 mPa·s;
iii) gegebenenfalls einen oder mehrere Silan-Haftvermittler;
iv) gegebenenfalls einen Füllstoff,
wobei wenigstens eine von der ersten und der zweiten Komponente einen Füllstoff enthält, der Aluminiumtrihydrat umfasst, wobei die Gesamtmenge an Füllstoff, der in allen Komponenten vorhanden ist, von 50 Gewichtsprozent bis 85 Gewichtsprozent beträgt und Aluminiumtrihydrat in dem oder den Füllstoffen in einer Menge vorhanden ist, die ausreicht, um wenigstens 30 Gewichtsprozent Aluminiumtrihydrat, vorzugsweise wenigstens 50 Gewichtsprozent Aluminiumtrihydrat, bevorzugter wenigstens 70 Gewichtsprozent Aluminiumtrihydrat, und höchst bevorzugt wenigstens 80 Gewichtsprozent Aluminiumtrihydrat, bezogen auf das Gesamtgewicht aller Komponenten, bereitzustellen; einen Silicon-Wärmestabilisator; und wobei wenigstens eine Komponente das keramisierende Additiv enthält, vorzugsweise ein keramisierendes Additiv, das Platin enthält; und wobei wenigstens eine der Komponenten einen Silan-Haftvermittler enthält,
wobei die Viskosität nach dem in der Beschreibung beschriebenen Verfahren bestimmt wird.

4. Elektrofahrzeugbatterieanordnung nach Anspruch 1 oder 3, ferner umfassend bis zu 5 Gewichtsprozent an einer Wärmestabilisatorzusammensetzung, die Titandioxid umfasst.

5. Elektrofahrzeugbatterieanordnung nach Anspruch 1 oder 2, wobei die sprühbare thixotrope Siliconzusammensetzung eine feuchtigkeitshärtbare Siliconzusammensetzung ist, umfassend;
i) wenigstens ein silanolgestopptes Polyorganosiloxan mit einer Viskosität von weniger als 10.000 mPa·s in einer Menge von mehr als 90 Gewichtsprozent, bezogen auf das Gesamtgewicht der Organosiliciumkomponenten;
ii) wenigstens ein keramisierendes Additiv, das Keramisierung der Organosiliciumzusammensetzung fördert;
iii) gegebenenfalls 0,01-2 Gewichtsprozent an einer Emulsion von Wasser und Silicon;
iv) wenigstens einen Alkoxysilan-Vernetzer;
v) gegebenenfalls einen Haftvermittler, der von Komponente iv) verschieden ist; und
iv) 50-85 Gewichtsprozent an Aluminiumtrihydrat-enthaltendem Füllstoff in einer Menge, die ausreicht, um wenigstens 30 Gewichtsprozent Aluminiumtrihydrat, bezogen auf das Gesamtgewicht der Siliconzusammensetzung, bereitzustellen, und
v) wenigstens einen Wärmestabilisator, wobei die Viskosität nach dem in der Beschreibung beschriebenen Verfahren bestimmt wird.

6. Elektrofahrzeugbatterieanordnung nach Anspruch 5, wobei die feuchtigkeitshärtbare Siliconzusammensetzung eine wenigstens zweikomponentige Zusammensetzung ist, wobei eine Komponente eine Emulsion von Wasser und Silicon und ein Silanol-gestopptes Organopolysiloxan umfasst und eine zweite Komponente einen Alkoxysilan-Vernetzer umfasst.

7. Elektrofahrzeugbatterieanordnung nach Anspruch 5, wobei der Silicon-Wärmestabilisator Titandioxid in einer Menge umfasst, die ausreicht, um 0,1 bis 3 Gewichtsprozent Titandioxid, bezogen auf das Gesamtgewicht der Siliconzusammensetzung, bereitzustellen, vorzugsweise 0,2 bis weniger als 2 Gewichtsprozent Titandioxid.

8. Hitzebeständige vernetzbare Organosiliciumzusammensetzung, geeignet zur Herstellung der Metallionen-Fahrzeugbatterieanordnungen nach Anspruch 1, die sprühbar und thixotrop ist, umfassend:
eine additionshärtbare oder feuchtigkeitshärtbare Siliconzusammensetzung, die mehr als 50 Gewichtsprozent und weniger als 85 Gewichtsprozent an Aluminiumtrihydrat-enthaltendem Füllstoff, bezogen auf das Gesamtgewicht der härtbaren Siliconzusammensetzung, enthält und ausreicht, um wenigstens 30 Gewichtsprozent Aluminiumtrihydrat, vorzugsweise wenigstens 50 Gewichtsprozent Aluminiumtrihydrat, bevorzugter wenigstens 70 Gewichtsprozent Aluminiumtrihydrat und höchst bevorzugt wenigstens 80 Gewichtsprozent Aluminiumtrihydrat, bezogen auf das Gesamtgewicht der Organosiliciumzusammensetzung, bereitzustellen, einen Silicon-Wärmestabilisator und wenigstens ein keramisierendes Additiv, das Keramisierung der Organosiliciumzusammensetzung fördert,
wobei die härtbare Siliconzusammensetzung nach Vernetzen zum Bilden eines vernetzten Silicons Wärmeübertragung von einer Seite eines Metallsubstrats, auf das die vernetzte Siliconzusammensetzung geschichtet ist, zu einer gegenüberliegenden Seite des Metallsubstrats verringert, so dass die gegenüberliegende Seite des Metallsubstrats eine Temperatur von 350 °C oder mehr für einen Zeitraum von wenigstens zwei Minuten nicht erreicht, wenn die dem Metallsubstrat gegenüberliegende Seite der vernetzten Siliconzusammensetzung gegenüber einer Wärmequelle exponiert wird, die bewirkt, dass die Temperatur der Oberfläche des vernetzten Silicons über 600 °C ansteigt, wenn bestimmt gemäß dem in der Beschreibung beschriebenen Verfahren.

9. Hitzebeständige vernetzbare Organosiliciumzusammensetzung nach Anspruch 8, die eine sprühbare thixotrope additionshärtbare Mehrkomponenten-Siliconzusammensetzung ist, die wenigstens zwei Komponenten wie folgt umfasst:
a) eine erste Komponente umfassend:
i) wenigstens ein vinylfunktionelles Polyorganosiloxan mit einer Viskosität von weniger als 4000 mPa·s, vorzugsweise weniger als 1000 mPa·s, in einer Menge von 20-70 Gewichtsprozent, bezogen auf das Gesamtgewicht aller Organosiliciumkomponenten;
ii) gegebenenfalls wenigstens ein silanolgestopptes Polyorganosiloxan oder nichtfunktionelles Polyorganosiloxan mit einer Viskosität von weniger als 10.000 mPa·s, vorzugsweise weniger als 1000 mPa·s, in einer Menge von weniger als 30 Gewichtsprozent, bezogen auf das Gesamtgewicht aller Organosiliciumverbindungen;
iii) gegebenenfalls einen Silan-Haftvermittler;
iv) wenigstens einen Hydrosilylierungskatalysator;
v) gegebenenfalls einen Füllstoff; und
b) eine zweite Komponente umfassend:
i) wenigstens einen Si-H-Vernetzer;
ii) gegebenenfalls ein oder mehrere silanolgestoppte Organopolysiloxane oder nichtfunktionelle Organopolysiloxane mit einer Viskosität von weniger als 10.000 MPa·s, vorzugsweise weniger als 1000 mPa·s, in einer Menge von weniger als 30 Gewichtsprozent, bezogen auf das Gesamtgewicht aller Organosiliciumkomponenten;
iii) gegebenenfalls einen oder mehrere Silan-Haftvermittler;
iv) gegebenenfalls einen Füllstoff,
wobei wenigstens eine Komponente einen Aluminiumtrihydrat-enthaltenden Füllstoff enthält, wobei die Gesamtmenge an Aluminiumtrihydrat-enthaltendem Füllstoff, der in allen Komponenten vorhanden ist, von 50 Gewichtsprozent bis 85 Gewichtsprozent beträgt und ausreicht, um wenigstens 30 Gewichtsprozent Aluminiumtrihydrat, vorzugsweise wenigstens 50 Gewichtsprozent Aluminiumtrihydrat, bevorzugter wenigstens 70 Gewichtsprozent Aluminiumtrihydrat und höchst bevorzugt wenigstens 80 Gewichtsprozent Aluminiumtrihydrat, bezogen auf das Gesamtgewicht der härtbaren Siliconzusammensetzung, bereitzustellen; wobei wenigstens eine Komponente ein keramisierendes Additiv enthält, das Keramisierung der Organosiliciumtemperaturen bei einer Temperatur von 600 °C oder mehr fördert, wenigstens eine Komponente einen Silicon-Wärmestabilisator umfasst, der Titandioxid umfasst, und wenigstens eine Komponente einen Silan-Haftvermittler enthält,
wobei die Viskosität nach dem in der Beschreibung beschriebenen Verfahren bestimmt wird.

10. Sprühbare thixotrope feuchtigkeitshärtbare Organosiliciumzusammensetzung, die zur Herstellung der Metallionen-Fahrzeugbatteriebaugruppe nach Anspruch 1 geeignet ist, umfassend:
i) wenigstens ein silanolgestopptes Polyorganosiloxan mit einer Viskosität von weniger als 10.000 mPa·s, vorzugsweise weniger als 1000 mPa·s, in einer Menge von mehr als 90 Gewichtsprozent, bezogen auf das Gesamtgewicht der Organosiliciumkomponenten der Organosiliciumzusammensetzung;
ii) einen Silicon-Wärmestabilisator; und
iii) wenigstens ein keramisierendes Additiv, das Keramisierung der Organosiliciumzusammensetzung bei einer Temperatur von 600 °C oder mehr fördert;
iv) gegebenenfalls 0,01-2 Gewichtsprozent an einer Emulsion von Silicon und Wasser; und
v) 50-85 Gewichtsprozent an Aluminiumtrihydrat-enthaltendem Füllstoff, bezogen auf das Gesamtgewicht der Organosiliciumzusammensetzung, der ausreichend Aluminiumtrihydrat enthält, um wenigstens 30 Gewichtsprozent Aluminiumtrihydrat, vorzugsweise wenigstens 50 Gewichtsprozent Aluminiumtrihydrat, bevorzugter wenigstens 70 Gewichtsprozent Aluminiumtrihydrat und höchst bevorzugt wenigstens 80 Gewichtsprozent Aluminiumtrihydrat, bezogen auf das Gesamtgewicht der Organosiliciumzusammensetzung, bereitzustellen,
wobei die feuchtigkeitshärtbare Organosiliciumzusammensetzung nach Härten zum Bilden einer vernetzten Siliconzusammensetzung Wärmeübertragung von einer Seite eines Metallsubstrats, auf das die vernetzte Siliconzusammensetzung geschichtet ist, zu einer gegenüberliegenden Seite des Metallsubstrats verringert, so dass die gegenüberliegende Seite des Metallsubstrats eine Temperatur von 350 °C oder mehr für einen Zeitraum von wenigstens zwei Minuten, vorzugsweise wenigstens fünf Minuten und bevorzugter wenigstens 8 Minuten nicht erreicht, wenn die dem Metallsubstrat gegenüberliegende Seite der vernetzten Siliconzusammensetzung gegenüber einer Wärmequelle mit einer Temperatur von 850 °C exponiert wird, die 2,5 cm von der Oberfläche des vernetzten Silicons angeordnet ist,
wobei die Viskosität nach dem in der Beschreibung beschriebenen Verfahren bestimmt wird.

11. Feuchtigkeitshärtbare Organosiliciumzusammensetzung nach Anspruch 10, wobei die feuchtigkeitshärtbare Siliconzusammensetzung eine wenigstens zweikomponentige Zusammensetzung ist, wobei eine Komponente eine Emulsion von Wasser in Silicon und ein Silanol-gestopptes Organopolysiloxan umfasst und eine zweite Komponente einen Alkoxysilan-Vernetzer und einen Kondensationskatalysator umfasst.

12. Organosiliciumzusammensetzung nach einem der Ansprüche 9 oder 10, wobei der Silicon-Wärmestabilisator Titandioxid in einer Menge umfasst, die ausreicht, um 0,1 bis 3 Gewichtsprozent Titandioxid, bezogen auf das Gesamtgewicht der Organosiliciumzusammensetzung, vorzugsweise 0,2 bis weniger als 2 Gewichtsprozent Titandioxid, bereitzustellen.

13. Verfahren zur Herstellung eines Metallionen-Batteriemoduls und/oder -Batteriepacks nach Anspruch 1 oder 2, umfassend:
a) Zusammenbauen einer Vielzahl von einzelnen Metallionen-Batteriezellen zu einem Batteriemodul und gegebenenfalls Zusammenbauen einer Vielzahl der Batteriemodule zu einem Batteriepack;
b) Bereitstellen wenigstens einer oberen Metallabdeckung, die bemessen ist, wenigstens eine obere Oberfläche des Batteriemoduls und/oder Batteriepacks zu umschließen, und gegebenenfalls einer unteren Metallabdeckung, die bemessen ist, wenigstens eine untere Oberfläche des Batteriemoduls und/oder Batteriepacks zu umschließen;
c) auf wenigstens die obere Metallabdeckung Aufbringen einer fließfähigen und sprühbaren, thixotropen vernetzbaren Organosiliciumzusammensetzung, die additionshärtbare Organosiliciumkomponenten oder feuchtigkeitshärtbare Organosiliciumkomponenten und einen Aluminiumtrihydrat-enthaltenden Füllstoff in einer Menge von 50-85 Gewichtsprozent, bezogen auf das Gesamtgewicht der Organosiliciumzusammensetzung, umfasst, wobei die Menge des Aluminiumtrihydrat-enthaltenden Füllstoffs und der Aluminiumtrihydrat-Anteil des Aluminiumtrihydrat-enthaltenden Füllstoffs derart sind, dass sie wenigstens 30 Gewichtsprozent Aluminiumtrihydrat, bevorzugter wenigstens 50 Gewichtsprozent Aluminiumtrihydrat, noch bevorzugter wenigstens 70 Gewichtsprozent Aluminiumtrihydrat und höchst bevorzugt wenigstens 80 Gewichtsprozent Aluminiumtrihydrat, bezogen auf das Gewicht der Organosiliciumzusammensetzung, bereitstellen, und ferner umfassend einen Silicon-Wärmestabilisator und wenigstens ein keramisierendes Additiv;
d) Montieren der oberen Metallabdeckung über den Vielzahl von Metallionen-Batteriezellen oder - Batteriemodulen,
wobei die vernetzbare Organosiliciumzusammensetzung nach Vernetzen zum Bilden eines vernetzten Silicons Wärmeübertragung von einer Seite des Metallsubstrats, auf das die vernetzte Siliconzusammensetzung geschichtet ist, zu einer gegenüberliegenden Seite des Metallsubstrats verringert, so dass die gegenüberliegende Seite des Metallsubstrats eine Temperatur von 350 °C oder mehr für einen Zeitraum von wenigstens zwei Minuten nicht erreicht, wenn die dem Metallsubstrat gegenüberliegende Seite der vernetzten Siliconzusammensetzung gegenüber einer Wärmequelle exponiert wird, die bewirkt, dass die Temperatur des vernetzten Silicons über 600 °C ansteigt, wenn gemäß dem in der Beschreibung beschriebenen Verfahren bestimmt.

14. Ionenbatteriemodul oder Batteriepack, hergestellt durch das Verfahren nach Anspruch 13.

## Revendications

1. Ensemble batterie de véhicule électrique, comprenant :
a) un agencement d'une pluralité de batteries à ions métalliques individuelles ;
b) éventuellement, un châssis entourant latéralement l'agencement de la pluralité de batteries à ions métalliques individuelles ;
c) éventuellement, un capot inférieur ;
d) un capot supérieur ; et
e) disposée entre l'agencement d'une pluralité de batteries et au moins l'un du capot inférieur et/ou du capot supérieur, une composition de silicone durcissable par addition ou durcissable à l'humidité thixotrope et pulvérisable réticulée comprenant plus de 50 pour cent en poids et moins de 85 pour cent en poids de charge contenant de l'aluminium trihydraté par rapport au poids total de la composition de silicone durcissable, les particules d'aluminium trihydraté de la charge constituant au moins 30 pour cent en poids de la composition de silicone durcissable, et au moins un additif de céramisation qui favorise la céramisation de la composition de silicone réticulée lors de l'exposition à des températures supérieures ou égales à 600 °C,
dans lequel la composition de silicone réticulée réduit le transfert de chaleur d'une surface de la composition de silicone réticulée la plus proche de l'agencement d'une pluralité de batteries vers une surface externe dudit capot inférieur ou dudit capot supérieur portant la composition de silicone réticulée, de façon telle que la surface externe n'atteint pas une température de 350 °C pendant au moins deux minutes lorsque la surface de la composition de silicone réticulée la plus proche de l'agencement d'une pluralité de batteries est exposée à une source de chaleur ayant une température de plus de 850 °C, positionnée à 2,5 cm de la surface de la composition d'organosilicium et lorsqu'elle est déterminée conformément à la méthode exposée dans la description.

2. Ensemble batterie de véhicule électrique selon la revendication 1, dans lequel l'agencement d'une pluralité de batteries individuelles est sous la forme de modules de batteries, chaque module contenant une seconde pluralité de batteries individuelles, et la composition d'organosilicium est appliquée sur le capot supérieur de l'ensemble batterie.

3. Ensemble batterie de véhicule électrique selon la revendication 1, dans lequel la composition de silicone thixotrope pulvérisable est une composition de silicone durcissable par addition à au moins deux composants, comprenant :
a) un premier composant, comprenant :
i) au moins un polyorganosiloxane à fonction vinyle ayant une viscosité inférieure à 4000 mPa·s, de préférence inférieure à 1000 mPa·s, en une quantité allant de 20 à 70 pour cent en poids par rapport au poids total de tous les composés d'organosilicium ;
ii) éventuellement, un ou plusieurs polyorganosiloxanes à terminaison silanol ou polyorganosilanes non fonctionnels ayant une viscosité inférieure à 10 000 mPa·s, de préférence inférieure à 1000 mPa·s, en une quantité de 20 à 40 pour cent en poids par rapport au poids total de tous les composés d'organosilicium ;
iii) au moins un promoteur d'adhérence silane ;
iv) au moins un catalyseur d'hydrosilylation ;
v) éventuellement, une charge ; et
b) un second composant, comprenant :
i) au moins un agent de réticulation à fonction Si-H ;
ii) éventuellement un ou plusieurs organopolysiloxanes à terminaison silanol ou polyorganosiloxanes non fonctionnels ayant une viscosité inférieure à 10 000 mPa·s, de préférence inférieure à 1000 mPa·s ;
iii) éventuellement, un ou plusieurs promoteurs d'adhérence silanes ;
iv) éventuellement, une charge,
dans lequel au moins l'un des premier et second composants contient une charge comprenant de l'aluminium trihydraté, la quantité totale de charge présente parmi tous les composants allant de 50 pour cent en poids à 85 pour cent en poids et de l'aluminium trihydraté étant présent dans la ou les charges en une quantité suffisante pour fournir au moins 30 pour cent en poids d'aluminium trihydraté, de préférence au moins 50 pour cent en poids d'aluminium trihydraté, plus préférablement au moins 70 pour cent en poids d'aluminium trihydraté et le plus préférablement au moins 80 pour cent en poids d'aluminium trihydraté, par rapport au poids total de tous les composants ; un stabilisant thermique de silicone ; et dans lequel au moins un composant contient ledit additif de céramisation, de préférence un additif de céramisation contenant du platine ; et dans lequel au moins l'un des composants contient un promoteur d'adhérence silane,
la viscosité étant déterminée conformément à la méthode exposée dans la description.

4. Ensemble batterie de véhicule électrique selon les revendications 1 ou 3, comprenant en outre jusqu'à 5 pour cent en poids d'une composition de stabilisant thermique comprenant du dioxyde de titane.

5. Ensemble batterie de véhicule électrique selon les revendications 1 ou 2, dans lequel la composition de silicone thixotrope pulvérisable est une composition de silicone durcissable à l'humidité, comprenant :
i) au moins un polyorganosiloxane à terminaison silanol ayant une viscosité inférieure à 10 000 mPa·s, en une quantité de plus de 90 pour cent en poids par rapport au poids total des composants d'organosilicium ;
ii) au moins un additif de céramisation qui favorise la céramisation de la composition d'organosilicium ;
iii) éventuellement de 0,01 à 2 pour cent en poids d'une émulsion d'eau et de silicone ;
iv) au moins un agent de réticulation alcoxysilane ;
v) éventuellement, un promoteur d'adhérence différent du composant iv) ; et
iv) de 50 à 85 pour cent en poids de charge contenant de l'aluminium trihydraté en une quantité suffisante pour apporter au moins 30 pour cent en poids d'aluminium trihydraté par rapport au poids total de la composition de silicone et
v) au moins un stabilisant thermique, la viscosité étant déterminée conformément à la méthode exposée dans la description.

6. Ensemble batterie de véhicule électrique selon la revendication 5, dans lequel la composition de silicone durcissable à l'humidité est une composition à au moins deux composants, un composant comprenant une émulsion d'eau et de silicone et un organopolysiloxane à terminaison silanol et un second composant comprenant un agent de réticulation alcoxysilane.

7. Ensemble batterie de véhicule électrique selon la revendication 5, dans lequel le stabilisant thermique de silicone comprend du dioxyde de titane, en une quantité suffisante pour apporter de 0,1 à 3 pour cent en poids de dioxyde de titane par rapport au poids total de la composition de silicone, de préférence de 0,2 à moins de 2 pour cent en poids de dioxyde de titane.

8. Composition d'organosilicium réticulable résistante à la chaleur utile pour la fabrication des ensembles batteries à ions métalliques de véhicule selon la revendication 1, qui est pulvérisable et thixotrope, comprenant :
une composition de silicone durcissable par addition ou durcissable à l'humidité contenant plus de 50 pour cent en poids et moins de 85 pour cent en poids de charge contenant de l'aluminium trihydraté par rapport au poids total de la composition de silicone durcissable et en quantité suffisante pour fournir au moins 30 pour cent en poids d'aluminium trihydraté, de préférence au moins 50 pour cent en poids d'aluminium trihydraté, plus préférablement au moins 70 pour cent en poids d'aluminium trihydraté et le plus préférablement au moins 80 pour cent en poids d'aluminium trihydraté par rapport au poids total de la composition d'organosilicium, un stabilisant thermique de silicone et au moins un additif de céramisation qui favorise la céramisation de la composition d'organosilicium,
la composition de silicone durcissable, après réticulation pour former une silicone réticulée, réduisant le transfert de chaleur, d'un côté d'un substrat métallique sur lequel ladite composition de silicone réticulée est appliquée en revêtement vers un côté opposé dudit substrat métallique, de façon telle que le côté opposé du substrat métallique n'atteint pas une température supérieure ou égale à 350 °C pendant au moins deux minutes lorsque le côté de la composition de silicone réticulée à l'opposé du substrat métallique est exposé à une source de chaleur qui fait monter la température de la surface de la silicone réticulée au-dessus de 600 °C, lorsqu'elle est déterminée conformément à la méthode exposée dans la description.

9. Composition d'organosilicium réticulable résistante à la chaleur selon la revendication 8 qui est une composition de silicone durcissable par addition à plusieurs composants thixotrope pulvérisable comprenant au moins deux composants comme suit :
a) un premier composant, comprenant :
i) au moins un polyorganosiloxane à fonction vinyle ayant une viscosité inférieure à 4000 mPa·s, de préférence inférieure à 1000 mPa·s, en une quantité allant de 20 à 70 pour cent en poids par rapport au poids total de tous les composants d'organosilicium ;
ii) éventuellement, au moins un polyorganosiloxane à terminaison silanol ou polyorganosiloxane non fonctionnel ayant une viscosité inférieure à 10 000 mPa·s, de préférence inférieure à 1000 mPa·s, en une quantité inférieure à 30 pour cent en poids par rapport au poids total de tous les composés d'organosilicium ;
iii) éventuellement, un promoteur d'adhérence silane ;
iv) au moins un catalyseur d'hydrosilylation ;
v) éventuellement, une charge ; et
b) un second composant, comprenant :
i) au moins un agent de réticulation Si-H ;
ii) éventuellement, un ou plusieurs organopolysiloxanes à terminaison silanol ou organopolysiloxanes non fonctionnels ayant une viscosité inférieure à 10 000 mPa·s, de préférence inférieure à 1000 mPa·s, en une quantité inférieure à 30 pour cent en poids par rapport au poids total de tous les composants d'organosilicium ;
iii) éventuellement, un ou plusieurs promoteurs d'adhérence silanes ;
iv) éventuellement, une charge,
dans laquelle au moins un composant contient une charge contenant de l'aluminium trihydraté, la quantité totale de charge contenant de l'aluminium trihydraté présente parmi tous les composants allant de 50 pour cent en poids à 85 pour cent en poids et étant suffisante pour fournir au moins 30 pour cent en poids d'aluminium trihydraté, de préférence au moins 50 pour cent en poids d'aluminium trihydraté, plus préférablement au moins 70 pour cent en poids d'aluminium trihydraté et le plus préférablement au moins 80 pour cent en poids d'aluminium trihydraté, par rapport au poids total de la composition de silicone durcissable ; au moins un composant contient un additif de céramisation qui favorise la céramisation des températures d'organosilicium à une température de 600 °C ou plus, au moins un composant comprend un stabilisant thermique de silicone comprenant du dioxyde de titane et au moins un composant contient un promoteur d'adhérence silane,
la viscosité étant déterminée conformément à la méthode exposée dans la description.

10. Composition d'organosilicium durcissable à l'humidité, thixotrope, pulvérisable, appropriée pour la fabrication des ensembles batteries à ions métalliques de véhicule selon la revendication 1, comprenant :
i) au moins un polyorganosiloxane à terminaison silanol ayant une viscosité inférieure à 10 000 mPa·s, de préférence inférieure à 1000 mPa·s, en une quantité de plus de 90 pour cent en poids par rapport au poids total des composants d'organosilicium de la composition d'organosilicium ;
ii) un stabilisant thermique de silicone ; et
iii) au moins un additif de céramisation qui favorise la céramisation de la composition d'organosilicium à une température supérieure ou égale à 600 °C ;
iv) éventuellement, de 0,01 à 2 pour cent en poids d'une émulsion de silicone et d'eau ; et
v) de 50 à 85 pour cent en poids de charge contenant de l'aluminium trihydraté par rapport au poids total de la composition d'organosilicium, contenant suffisamment d'aluminium trihydraté pour fournir au moins 30 pour cent en poids d'aluminium trihydraté, de préférence au moins 50 pour cent en poids d'aluminium trihydraté, plus préférablement au moins 70 pour cent en poids d'aluminium trihydraté et le plus préférablement au moins 80 pour cent en poids d'aluminium trihydraté, par rapport au poids total de la composition d'organosilicium,
la composition d'organosilicium durcissable à l'humidité, après durcissement pour former une composition de silicone réticulée, réduisant le transfert de chaleur d'un côté d'un substrat métallique sur lequel ladite composition de silicone réticulée est appliquée en revêtement vers un côté opposé dudit substrat métallique de façon telle que le côté opposé du substrat métallique n'atteint pas une température supérieure ou égale à 350 °C pendant au moins deux minutes, de préférence au moins cinq minutes et plus préférablement au moins 8 minutes, lorsque le côté de la composition de silicone réticulée à l'opposé du substrat métallique est exposé à une source de chaleur ayant une température de 850 °C positionnée à 2,5 cm de la surface de la silicone réticulée,
la viscosité étant déterminée conformément à la méthode exposée dans la description.

11. Composition d'organosilicium durcissable à l'humidité selon la revendication 10, la composition de silicone durcissable à l'humidité étant une composition à au moins deux composants, un composant comprenant une émulsion d'eau dans de la silicone et un organopolysiloxane à terminaison silanol et un second composant comprenant un agent de réticulation alcoxysilane et un catalyseur de condensation.

12. Composition d'organosilicium selon l'une quelconque des revendications 9 ou 10, dans laquelle le stabilisant thermique de silicone comprend du dioxyde de titane, en une quantité suffisante pour apporter de 0,1 à 3 pour cent en poids de dioxyde de titane par rapport au poids total de la composition d'organosilicium, de préférence de 0,2 à moins de 2 pour cent en poids de dioxyde de titane.

13. Procédé pour la fabrication d'un module de batteries et/ou d'un pack de batteries à ions métalliques selon la revendication 1 ou 2, comprenant :
a) l'assemblage d'une pluralité de cellules de batterie à ions métalliques individuelles en un module de batteries et éventuellement l'assemblage d'une pluralité desdits modules de batteries en un pack de batteries ;
b) la fourniture d'au moins un capot métallique supérieur dimensionné pour enfermer au moins une surface supérieure du module de batteries et/ou du pack de batteries et éventuellement d'un capot métallique inférieur dimensionné pour enfermer au moins une surface inférieure du module de batteries et/ou du pack de batteries ;
c) l'application sur au moins le capot métallique supérieur, d'une composition d'organosilicium réticulable, thixotrope, pouvant s'écouler et pulvérisable comprenant des composants d'organosilicium durcissables par addition ou des composants d'organosilicium durcissables à l'humidité et une charge contenant de l'aluminium trihydraté en une quantité allant de 50 à 85 pour cent en poids par rapport au poids total de la composition d'organosilicium, la quantité de la charge contenant de l'aluminium trihydraté et la proportion d'aluminium trihydraté de la charge contenant de l'aluminium trihydraté étant telles qu'elles apportent au moins 30 pour cent en poids d'aluminium trihydraté, plus préférablement au moins 50 pour cent en poids d'aluminium trihydraté, encore plus préférablement au moins 70 pour cent en poids d'aluminium trihydraté et le plus préférablement au moins 80 pour cent en poids d'aluminium trihydraté par rapport au poids de la composition d'organosilicium, et comprenant en outre un stabilisant thermique de silicone et au moins un additif de céramisation ;
d) le montage du capot métallique supérieur sur la pluralité de cellules de batterie ou modules de batteries à ions métalliques,
dans lequel la composition d'organosilicium réticulable, après réticulation pour former une silicone réticulée, réduit le transfert de chaleur d'un côté du substrat métallique sur lequel ladite composition de silicone réticulée est appliquée en revêtement vers un côté opposé dudit substrat métallique, de façon telle que le côté opposé du substrat métallique n'atteint pas une température supérieure ou égale à 350 °C pendant au moins deux minutes lorsque le côté de la composition de silicone réticulée à l'opposé du substrat métallique est exposé à une source de chaleur qui fait monter la température de la silicone réticulée au-dessus de 600 °C, lorsqu'elle est déterminée conformément à la méthode exposée dans la description.

14. Module de batteries ou pack de batteries ioniques, préparés par le procédé selon la revendication 13.
